(19) **Europäisches Patentamt / European Patent Office / Office européen des brevets**

(11) **EP 2 112 619 B1**

(12) **EUROPEAN PATENT SPECIFICATION**

(45) Date of publication and mention
of the grant of the patent:
**25.07.2012 Bulletin 2012/30**

(51) Int Cl.:
*G06K 9/00* (2006.01)        *G06T 11/00* (2006.01)
*G06T 15/00* (2011.01)

(21) Application number: **08007794.4**

(22) Date of filing: **22.04.2008**

(54) **Video data processing**

Videodatenverarbeitung

Traitement de données vidéo

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**28.10.2009 Bulletin 2009/44**

(73) Proprietor: **Universität Stuttgart**
**70174 Stuttgart (DE)**

(72) Inventors:
- **Botchen, Ralf, Dipl.-Inf.**
  **70599 Stuttgart (DE)**
- **Weiskopf, Daniel, Prof.**
  **72070 Tübingen (DE)**
- **Ertl, Thomas, Prof.**
  **72070 Tübingen (DE)**
- **Chen, Min, Prof.**
  **Southgate**
  **SA3 2 DW (GB)**

(74) Representative: **Müller-Boré & Partner**
**Patentanwälte**
**Grafinger Straße 2**
**81671 München (DE)**

(56) References cited:
**EP-A- 0 700 017        EP-A- 1 868 162**
**WO-A-2006/100674**

- **R. BOTCHEN ET AL.: "GPU-assisted Multi-field Video Volume Vizualisation" PROC. VOLUME GRAPHICS, [Online] 30 June 2006 (2006-06-30), pages 1-8, XP002505166 Retrieved from the Internet: URL:http://www.vis.uni-stuttgart.de/ger/re search/pub/pub2006/vg06-botchen.pdf> [retrieved on 2008-11-21]**

- **DANIEL DEMENTHON ET AL: "Video retrieval of near-duplicates using [kappa]-nearest neighbor retrieval of spatio-temporal descriptors" 27 July 2006 (2006-07-27), MULTIMEDIA TOOLS AND APPLICATIONS, KLUWER ACADEMIC PUBLISHERS, BO, PAGE(S) 229 - 253 , XP019436838 ISSN: 1573-7721 * the whole document ***

- **RICQUEBOURG Y ET AL: "REAL-TIME TRACKING OF MOVING PERSONS BY EXPLOITING SPATIO-TEMPORAL IMAGE SLICES" IEEE TRANSACTIONS ON PATTERN ANALYSIS AND MACHINE INTELLIGENCE, IEEE SERVICE CENTER, LOS ALAMITOS, CA, US, vol. 22, no. 8, 1 August 2000 (2000-08-01), pages 797-808, XP000976487 ISSN: 0162-8828**

- **EFROS ET AL: "Recognizing action at a distance" PROCEEDINGS OF THE EIGHT IEEE INTERNATIONAL CONFERENCE ON COMPUTER VISION. (ICCV). NICE, FRANCE, OCT. 13 - 16, 2003; [INTERNATIONAL CONFERENCE ON COMPUTER VISION], LOS ALAMITOS, CA : IEEE COMP. SOC, US, 13 October 2003 (2003-10-13), pages 726-733vol.2, XP031213120 ISBN: 978-0-7695-1950-0**

- **DOLLAR P ET AL: "Behavior Recognition via Sparse Spatio-Temporal Features" VISUAL SURVEILLANCE AND PERFORMANCE EVALUATION OF TRACKING AND SURVEIL LANCE, 2005. 2ND JOINT IEEE INTERNATIONAL WORKSHOP ON BEIJING, CHINA 15-16 OCT. 2005, PISCATAWAY, NJ, USA,IEEE, 15 October 2005 (2005-10-15), pages 65-72, XP010875390 ISBN: 978-0-7803-9424-7**

• SHECHTMAN E ET AL: "Space-Time Behavior-Based Correlation OR How to Tell If Two Underlying Motion Fields Are Similar Without Computing Them?" 1 November 2007 (2007-11-01), IEEE TRANSACTIONS ON PATTERN ANALYSIS AND MACHINE INTELLIGENCE, IEEE SERVICE CENTER, LOS ALAMITOS, CA, US, PAGE(S) 2045 - 2056 , XP011191996 ISSN: 0162-8828 * the whole document *

**Description**

Technical Field

The description is directed generally to image or picture data processing, particularly to video data processing, and more particularly to a computer-implemented method, computer system, and computer program product for dynamically detecting and visualizing actions and/or events in video data streams.

Background

In principle, a video data stream may be considered to be composed of numerous interrelated pixel signals being inherently much more complex than other forms of digital signals such as recordings of voice, electrical activity of the heart and/or seismic waves. Hence, dynamically processing comprising detecting actions and events, known or unknown, in video data streams, dynamically, summarizing a video data stream, and cost-effectively (re)presenting or visualizing a record of a video data stream remains a huge challenge in video data processing and visualization.

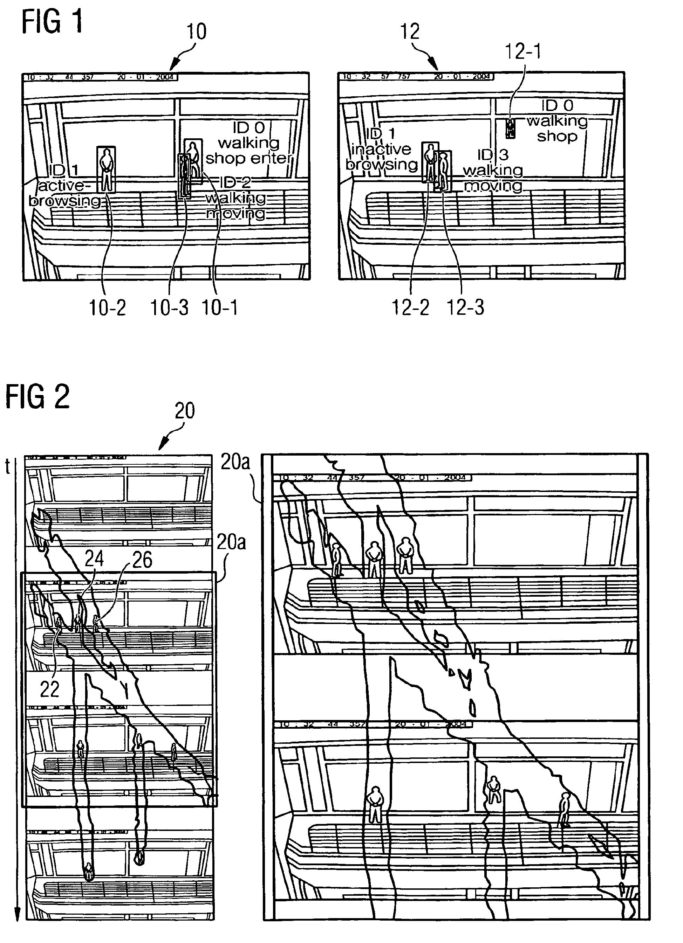

An exemplary video data stream of a presentation based on frames or snapshots 10, 12 (i.e. small temporal segments of a video data stream) together with annotated texts that were hand-labeled is shown in **Fig. 1.** Both of the frames 10 and 12 comprise three objects, elements, or identifiers 10-1, 10-2, 10-3 and 12-1, 12-2, 12-3, respectively (e.g. persons) that are hand-labeled with provided information such as object bounding boxes and basic action classifications (e.g. ID0 denotes entering a shop, ID1 denotes browsing a window of the shop, and ID2 denotes passing by). Even without contemplating the difficulties in developing a system that would produce reliable and comprehensive annotated texts dynamically in a variety of situations, the visual record exemplified by Fig. 1 would require a lot of frames and a lot of texts in order for viewers to observe and comprehend activities of objects and/or events in the video data stream.

Basically, automatic annotation of video data streams is an analytical process. Statistical analysis of time-dependent behavioral data typically encounters a number of difficulties, comprising:

    (i) It cannot take place simultaneously. For example, in real life, browsing shop windows may be accompanied by a slow walking action.
    (ii) It is difficult to define precisely a boundary and length of an action. For example, there will always be gradual changes between walking and standing, especially in slow walking.
    (iii) The semantic classification to actions may not always be reliable, especially when it is done using an automatic recognition technique.
    (iv) Many statistical modeling methods rely on a finite state machine, which sometimes do not encompass all admissible sequences of actions in real life.

All these difficulties may be applicable to video analysis. Hence, (dynamic) action and/or event detection and classification of objects (known or unknown) in a video data stream remains an unsolved problem in video data analysis based on or using computer vision techniques.

Document R. Botchen et al. "GPU-assisted Multi-field Video Volume Visualization", Volume Graphics 2006 relates to an implementation of a number of image processing filters, and in particular an optical flow filter for estimating motion flows in a video.

Document D. DeMenthon et al. "Video retrieval of near-duplicates using k-nearest neighbor retrieval of spatio-temporal descriptors", Multimed Tools Appl (2006 30:229-253 relates to a methodology for implementing video search functions such as retrieval of near-duplicate videos and recognition of actions in surveillance video.

Document Y. Ricquebourg et al. "Real-Time Tracking of Moving Persons by Exploiting Spatio-Temporal Image Slices" IEEE Transactions on Pattern Analysis and Machine Intelligence, vol. 22, no. 8, August 01, 2000 relates to analizing human motion in an image sequence for video-surveillance.

Document EP 1 868 162 A2 relates to an abnormal action detector for accurately detecting the position of an object together with an abnormal action using a cubic higher-order auto-correlation feature.

Summary

Accordingly, the present invention may support computer vision techniques using visualization techniques in combination with the computer vision techniques.

In one general aspect, a computer-implemented method according to claim 1 for dynamically detecting and visualizing actions and/or events in video data streams comprises:

    dynamically detecting and extracting one or more objects and one or more attributes relating to the one or more objects from at least one video data stream by using action recognition filtering for attribute detection and time series analysis for relation detection among the extracted one or more objects; and

dynamically generating a multi-field video visualization along a time axis by depicting the video data stream as a series of frames at a relatively sparse or even dense interval and by continuously rendering the one or more attributes relating to the one or more objects with substantially continuous abstract illustrations; and

dynamically combining detection, extraction of objects and combining with multi-field visualization in a video perpetuo gram (VPG), which may show at least one video stream in parallel, and which allows for real-time display and interaction.

By implementing a method for dynamically detecting and visualizing actions and/or events in one or more video data streams a continuous multi-field video visualization along a time axis in terms of a video perpetuo gram (VPG) representation may be realized. The VPG may be a video volume rendered or depicted as a series of frames which is illustrated with a shear in z-dimension and a parallel or orthographic projection such that a continuous (abstract) illustration of the multi-field video visualization is enabled or achieved.

In linear algebra and functional analysis, a projection is a linear transformation P from a vector space to itself such that $P^2 = P$. Projections map the whole vector space to a subspace and leave the points in the subspace unchanged. In this respect, a parallel projection (also referred to as orthogonal projection) is a projection for which the range U and the null space V are orthogonal subspaces. Orthographic projection may be considered as a means of representing a three-dimensional (3D) object in two dimensions (2D). It is a form of parallel projection, where the view direction is orthogonal to the projection plane.

Furthermore, a plurality of parallel frames of one or more video data streams may be represented or visualized in parallel in a VPG, wherein the one or more video data streams may be recorded by one or more video cameras and may be processed by one or more processors.

Detected and recogized one or more objects and related or associated attributes (e.g. actions and/or events of the objects and/or relationships among the objects) which are extracted from at least one video data stream are highlighted with continuous abstract illustrations by mapping the extracted objects and related attributes to color, thickness, opacity, symbols, and/or glyphs representations such that a multi-field video visualization conveying multi-field information (i.e. different attributes belonging to one or more different objects) is achieved. Such a multi-field video visualization may be a VPG, i.e. the multi-field information rendered with a video volume from the video data stream illustrated with a shear in z-dimension and a parallel or orthogonal projection.

In other words, a visual representation (i.e. a multi-field video visualization) of a continuous video data stream is created by combining computer vision techniques and visualization techniques, wherein context information (e.g. a video frames or snapshots from a video volume and/or video data stream) and focus information (e.g. objects and related attributes such as actions and/or relations among the objects extracted from the video volume and/or video data stream) are rendered substantially simultaneously. Consequently, such visualization may convey both the raw imagery information of the video data stream (i.e. context information) as well as processed information such as, extracted actions, recognized objects or detected events (i.e. focus information). Computer vision techniques may be used to extract and/or recognize objects from the video data stream. The latter, i.e. the focus information, may be application-specific.

Such a combination of computer vision techniques and visualization techniques in terms of a multi-field video visualization of a video data stream which allows for a continuously streamed representation of the extracted data and/or information (objects and related attributes) enables an improved man-machine interaction. For example, a viewer or user of such a multi-field video visualization may interact with the system/method interactively. By visualizing the extracted objects and related attributes, the user may more easily recognize errors in extracted and/or analyzed objects and related attributes. In this way, the visualization may be improved.

A visualization solution of video data streams is provided, which is referred to as a video perpetuo gram (VPG), where a video (data) stream is depicted as a series or sequence of snapshots or frames at an interval, wherein the interval could be arbitrary, sparse or dense, and detected attributes, i.e. actions and/or events (e.g. motions or movements of extracted objects) are highlighted (using rendering and/or visualization techniques) with continuous abstract illustrations or visual mappings, using colors, symbols, and/or other rendering techniques in an adequate combination for each of the extracted attributes. Since more than one extracted attribute may be visualized simultaneously, the visualization may be referred to as a multi-field visualization. The combined imagery (e.g. video frames) and illustrative (e.g. extracted objects and related attributes) visualization, i.e. a combination of context and focus information conveys multi-field information relating to different attributes associated with one or more extracted objects (e.g. persons or other possibly moving objects such as vehicles).

The above method handles raw (e.g. video frames or snapshots from a video data stream) and processed (e.g. objects extracted from the video data stream and related attributes describing actions or events of and/or between the extracted objects) information of a video data stream in a multi-field video visualization. Data and/or information relating to raw video data such as video frames or snapshots may also be referred to as context information while processed data and/or information from the video data stream may also be referred to as focus information.

Several attributes of processed objects are highlighted, rendered, or visualized in a multi-field video visualization, including detected actions and/or events in video data streams, and estimated relationship between recognized objects.

The multi-field (video) visualization may be referred to as a pipeline, because an input video data stream may be streamed and rendered or visualized continuously such that a user may interact interactively with the analysis process (which extracts and/or recognizes objects and related attributes from the input video data stream).

The multi-field video data visualization may serve a number of purposes, including:

- *Fast temporal overview*. The visualization would make it easy for viewers to gain an overview of a temporal segment of a video data stream without watching the one or more whole volumes from the video data stream, or trying to piece together an overview from several disconnected snapshots or frames. For this purpose, at least two different approaches may by realized, (1) "dynamic stills", which integrates or combines a plurality of important (key) frames cross-faded in a final illustration, and (2) "clip trailers", which cuts important (moving and/or movable) objects being animated in front of a static background (video frame or snapshot).
- *Focus highlighting*. The visualization would highlight (i.e. visualize or render) specific processed information (i.e. focus information) against raw imagery information (i.e. context information), and draws a viewers' attention to objects and related attributes such as actions or events that might be of interest in a specific context.
- *Fault tolerance*. The visualization would enable viewers to identify more in the processed information since automated computer vision techniques and/or statistical analysis are unlikely to deliver 100% accuracy. In other words, by combining computer vision techniques with visualization, accuracy and reliability of extracted and processed information and/or data (e.g. objects and related attributes) may be enhanced.
- *Long-term record*. The visualization could be used as a long-term visual record of a video data stream.

One advantage for video data visualization according to the present invention is that it enables viewers to recognize primitive attributes (comprising actions) of objects and their spatial and temporal relationship from illustrated records of a video data stream, and to empower them to use their superior perceptual and semantic reasoning skills to detect complex events. Hence, the multi-field video visualization improves man-machine interaction.

Additionally, the method may make use of additional information of the video data stream for recognizing objects and related attributes such as actions or relations between objects. This information can be provided by another device, or complete this information on-the-fly. Beyond, the method may detect attributes or elements hinting a possible relationship between objects. When such hints are illustrated in combination with other visual features (e.g., object tracks or traces), they provide a powerful visualization to detect complex relationships among extracted objects.

In other words, a substantially simultaneous visualization or representation of context information and focus information of a video data stream is achieved in terms of a multi-field video visualization which allows for an efficient representation of a continuous description of video data along a temporal or time axis which provides a user an understanding of the temporal behavior of the extracted objects. For this purpose, an available image space may be used efficiently. Furthermore, due to extraction of specific (possibly depending on a context of the video data stream) extracted attributes, single actions of the extracted objects may not be overlooked. Beyond, by combining or coupling computer vision techniques for extracting objects and related attributes from video data streams with a visualization method according to the present invention, accuracy and reliability of the extracted data and/or information may be enhanced.

The multi-field video visualization may enable a long-term representation of long-term video data recoding comprising visualization of objects and their related attributes comprising actions, relations to other objects, and/or general features of the video data stream. Accordingly, large video data sets may be looked through more efficiently by a viewer. Such a multi-field video video visualization hence enables e.g. for surveillance video recording, a classification of actions and/or events while (substantially concurrently or simultaneously) visualizing the extracted data and/or information more reliable, in particular, in the context of the video data stream itself.

According to another aspect, the one or more attributes may comprise at least one object position and size attribute, at least one action attribute, at least one relation attribute, and/or at least one plausibility attribute relating to the one or more objects.

According to yet another aspect, the action recognition filtering may comprise:

tracking and stabilizing the one or more objects by computing at least one motion sequence for at least one of the one or more objects; and
computing at least one motion descriptor for the at least one motion sequence.

By adapting a recognition filter method and extend the recognition filter method as described above, it may become possible to give a premise about possible relations of objects in a scene of a video data stream.

Applying the above recognition filtering enables viewers to recognize primitive actions of objects and their spatial and temporal relationship from illustrated records of a video data stream and to empower them to use their superior perceptual and semantic reasoning skills to detect complex events. Furthermore, the above method allows for detection and recognition of more subtle differences in motions and/or movements (and/or further actions) of extracted objects.

According to yet another aspect, the time series analysis may comprise functions for performing filtering, moving average, cross-correlation, and/or power of time series computations on the one or more objects and their related attributes. It should be understood that any other analysis approach or filter can instead be used to enhance the method.

Such analysis techniques allows for efficient detection of relations or relationships among objects extracted from a video data stream, e.g. using the above recognition filtering. Furthermore, these techniques are adequate for real-time processing of video-data streams wherein a related visualization of extracted data and/or information may be updated dynamically, with only the access to video data in a relatively short time span or time period.

According to the general aspect, depicting the video data stream as a series of frames may further comprise:

placing the frames as snapshots at any position in a video volume rendered within a time span and applying a different viewing angle and a sheared volume in z-dimension to each of the frames; wherein the detected one or more objects and their related one or more attributes are highlighted with the continuous abstract illustrations such that the multi-field video visualization (20) conveys multi-field information; and
constructing a video perpetuo gram (VPG) with the video volume which is illustrated with a shear in z-dimension and a parallel or orthographic projection such that a continuous illustration is enabled.

According to yet another aspect, the at least one video streams and at least one further video data stream may be recorded by one ore more video cameras is visualized in parallel in the multi-field video visualization.

According to yet another aspect, generating a multi-field video visualization may further comprise:

visualizing the one or more attributes of the one or more objects in a combined focus and context approach by blending the frames with a deph-dependent alpha value over a visible volume signature and by rendering the one or more objects with substantially full opacity;
combining for the multi-field video visualization of the video data stream, volume rendering of object traces indicating relations among the one or more objects with additional glyphs to indicate the one or more attributes as object actions of the one or more objects.

Accordingly, the visualization techniques described above and throughout this application may be built upon a volume renderer (e.g. a slice-based volume renderer) modified for video volume rendering. In particular, volume rendering (e.g. single-pass volume rendering) may be combined with additional glyphs to indicate object actions. For example, a volumetric representation of object traces indicating relations of extracted objects, illustrated with the same color is used and motion glyphs are rendered as opaque geometry over the object traces, whereby, for example, a square represents a standing (i.e. not moving) objects, and arrows indicate a move or motion to the left or a move or motion to the right of objects, respectively.

Furthermore, to prepare the framework for live video streaming and thus a real-time update of the visualization display, the system supports a bricking mechanism (e.g. a chunk-based frame-by-frame bricking mechanism).

According to yet another aspect, generating a multi-field video visualization may further comprise:

employing methods to achieve real-time rendering and hence employing intrinsic parallelity of any specific processing unit.

A GPU implementation may be used for rendering processed video data and/or information (including extracted objects and associated attributes) which facilitates a stream-specific viewing specification through a sheared object space, as well as volume bricking and combinational rendering of volume data and glyphs. By choosing an appropriate shear angle, best fitting for overlapping objects and frame occlusion may be achieved.

According to yet another aspect, rendering the one or more attributes may further comprise:

visualizing the at least one object position and size attribute using a thickness-based mapping;
visualizing the at least one action attribute using a color-based mapping or a symbol-based mapping;
visualizing the at least one relation attribute using a color-based mapping; and/or
visualizing the at least one plausibility attribute using a thickness-based mapping or a color-based mapping.

It should be understood, that the above merely provides an example of combining different rendering or visualization techniques for the different attributes may be used. In fact, any combination could be used or defined by the user. This is adequate, as long as the illustration is intuitively understandable.

Such a visualization of extracted video data attributes may provide a suitable combination of different visual mappings (or rendering techniques) for conveying multiple attributes, and enable thus effective and efficient use of the designed space of visualization. Accordingly, the multi-field visualization of video data streams is optimized through combinations of different mappings. In fact, the combination of such visual mappings may not be straightforward. Therefore, video volume rendering techniques are used in combination with glyph theory.

In particular, following problems may arise when combining different mappings for attribute visualization: A visual clutter (caused by too many objects per frame at a time) leading to an inadequate spatial perception. Object occlusion over several overlapping frames may arise as well as side effects in terms of color. Consequently, a combination chosen by a user should remain understandable.

In another general aspect there is provided a computer-program product comprising computer readable instructions, which when loaded and run in a computer system and/or computer network system, cause the computer system and/or the computer network system to perform a method as described.

In yet another general aspect, a system according to claim 10 for dynamically detecting and visualizing actions and/or events in video data streams comprises:

a video data processing sub-system operable to dynamically detect and extract one or more objects and one or more attributes relating to the one or more objects from at least one video data stream by using action recognition filtering for attribute detection and time series analysis for relation detection among the extracted one or more objects; and

a video data visualization sub-system operable to dynamically generate a multi-field video visualization along a time axis by depicting the video data stream as a series of frames at a relatively sparse or even dense interval and by continuously rendering the one or more attributes relating to the one or more objects with substantially continuous abstract illustrations.

The subject matter described in this specification can be implemented as a method or as a system or using computer program products, tangibly embodied in information carriers, such as a CD-ROM, a DVD-ROM, a semiconductor memory, and a hard disk. Such computer program products may cause a data processing apparatus to conduct one or more operations described in this specification.

In addition, the subject matter described in this specification can also be implemented as a system including a processor and a memory coupled to the processor. The memory may encode one or more programs that cause the processor to perform one or more of the method acts described in this specification. Further the subject matter described in this specification can be implemented using various machines.

Details of one or more implementations are set forth in the accompanying exemplary drawings and exemplary description below. Other features will be apparent from the description and drawings, and from the claims.

Brief Description of the Drawings

Figure 1 shows exemplary frames of video data streams of a presentation based on snapshots together with annotated texts that were with the provided information.

Figure 2 shows an exemplary video visualization solution of a video data stream of a small temporal segment of a video.

Figure 3 shows an exemplary flow diagram for processing and visualizing action-based video data.

Figures 4A to 4E show an exemplary visualization of a construction of a motion descriptor.

Figures 5A and 5B show an exemplary classification of a frame of a motion sequence, wherein a result of the classification is shown as volume representation for a time span in Figure 5A and a result of the classification for three different actions is shown in Figure 5B.

Figure 6 shows an exemplary simple temporal scenario capturing the essence of an action-based video.

Figures 7A to 7F show six different examples of visual mappings, namely color (7A), luminance (7B), opacity (7C), thickness (7D), symbols (7E), and textures (7F).

Figure 8 shows an exemplary color mapping for single frames.

Figure 9 shows an exemplary glyph-based visualization of an action type.

Figure 10 shows an exemplary visualization of action types over a time span.

Figure 11 shows the same exemplary visualization of action types over a time span as Figure 10 but rendered using other visual mapping combinations.

Figure 12 shows a further exemplary visualization of action types over a time span.

Figure 13 shows the same further exemplary visualization of action types over a time span as Figure 10 but rendered using other visual mapping combinations.

Figure 14 shows yet a further exemplary visualization of action types over a time span.

Figure 15 shows an exemplary visualization of an endless image of a video data stream.

Figure 16 shows a block diagram of an exemplary computer (network) system.

Technical Terms

Following technical terms are widely used throughout the description. The terms may refer to but are not limited to the subsequently given explanations.

*Streaming Media/Data Streams:*

A streaming media or streaming multimedia relates to data streams comprising video data streams, audio data streams, and/or text data streams. Such streaming data may be constantly and/or continuously received and displayed and/or rendered in a rendering device such as a display while it is being delivered by a provider. Streams thus refer to a delivery method of (endless) data or media rather than a medium (e.g. video, audio, text) itself.

*(Video) Frame:*

In a video and related media, a (video) frame relates to one of a plurality of still images or pictures which compose the moving picture or video as a whole. When a moving picture or video is displayed, each frame may be flashed for a short time (e.g. $1/24^{th}$, $1/25^{th}$, or $1/30^{th}$, of a second, where any given frame rate is appropriate here: 1/20, 1/12, 1/10) and then immediately replaced by a next frame. Persistence of visions may blend frames together, producing an illusion of a moving image or picture. Frames may also be referred to as snapshots.

*GPU (Graphics Processing Unit):*

A GPU (also occasionally referred to as visual processing unit or VPU) may be a dedicated graphics rendering device for a (mobile) computer device such as a personal computer with processing capabilities and programability, a work station, a game console, a mobile phone, or a PDA.

*Computer Vision Techniques:*

In general, computer vision may be concerned with techniques for building artificial systems that obtain information from images or pictures. Image or picture data may take many different forms such as video (data) sequences, views from multiple camera devices, and/or multi-dimensional data from a medical scanner. A wide variety of techniques from different fields of computer science including artificial intelligence, machine learning, image processing and analysis, imaging, and signal processing are employed and adapted in computer vision. Computer vision may tend to focus on a 3D scene projected onto one or several images, e.g. how to reconstruct structure or other information about the 3D scene from one or several images. Computer vision may rely on more or less complex assumptions about a scene depicted in an image. A plurality of different computer vision techniques have been developed within the last decades comprising recognition, motion (e.g. movement of objects in a scene), scene reconstruction, and/or image restoration (relating to removal of various kinds of noises from images). Recognition may relate to aspects of determining whether or not image data comprises some specific object, feature, and/or activity. Recognition may comprise recognition methods, identification methods, and/or detection methods. Recognition methods may relate to recognizing one or more prespecified or learned objects or object classes possibly together with their 2D positions in an image or their 3D positions in a scene. Identification methods may relate to recognition of one or more individual instances of an object such as a person's face or finger print, or identification of a specific vehicle. Detection methods may relate to scanning an image for one or more specific conditions such as a detection of a possibly abnormal cell or tissues in medical images or detection of vehicles in an automatic road toll system. One or more of the addressed computer vision techniques may be adapted within the present application.

*Data Visualization:*

In computer science, data visualization may relate to use of interactive, sensory representations, typically visual, of abstract data possibly to reinforce cognition, hypothesis building, and reasoning. Practical applications of data and/or information visualization in computer programs may involve selecting, transforming and representing abstract data in a form that may facilitate human interaction e.g. for exploration and/or understanding. Data visualization may include interactivity and/or dynamics of visual representations over a given period of time.

*Objects and corresponding attributes of video data:*

When using computer vision techniques to analyze a video data stream, one or more objects, e.g. a human figure or a person, or any other possibly moving elements may be extracted from the video data stream. Such objects may be of interest when analyzing a video data stream. For example, coming and leaving vehicles may be of interest when analyzing a parking lot for surveillance purposes. Attributes corresponding to such objects may characterize the objects such as the size and position of an object, actions (e.g. motions or movements) of objects, relations or relationships among objects, and/or changes of objects over time.

Detailed Description

In the following, a detailed description of examples will be given with reference to the drawings. It should be understood that various modifications to the examples may be made. In particular, elements of one example may be combined and used in other examples to form new examples.
Creating a continuous spatio-temporal visual representation for a data stream of at least two-dimensional data (e.g. a picture, image or video (data) stream) should convey both a raw imagery information of the video data stream and processed information. The (raw) imagery information may also be referred to as context information of a video data stream comprising one or more frames or snapshots taken from the video data stream which describe one or more (substantially) essential video scenes. The processed information may also be referred to as focus information of a video data stream comprising extracted video data elements or objects and/or attributes (i.e. characteristics or features) describing and/or specifying the objects. Such characteristics of objects (e.g. a human figure or other possibly moving entities) may comprise attributes describing a size of an object, actions such as motions or movements of an object, changes or modifications of an object, events relating to an object, and/or relations or relationships among objects extracted from a video data stream. In other words, focus information may comprise extracted actions, recognized objects, and/or detected events of a video data stream.
In order to support the above aspects, (multi-field) video visualization is built (created or realized) on a set of reliable primitive action recognition functions or recognition filtering, while minimizing the use of inaccurate and unreliable semantic classification of events. Action recognition functions may be functions to recognize actions such as motions or movements of one or more objects extracted from a video data stream. For this purpose, a video summarization and illustration method (i.e. video data processing and visualization methods) is implemented that can be used to present a record of at least one video data stream dynamically and cost-effectively. Said computer implemented method comprises visualizing (rendering, representing, or depicting) at least one video data stream as a series of continuing video volumes, wherein frames of a video data stream are displayed (visualized, represented, or rendered) at a relatively sparse interval, and automatically highlighting recognized actions (e.g. objects and related attributes extracted from the video data stream) with a set of visual mappings (i.e. by using or applying one or more visual mapping functions).
Such a method enables viewers or users to make a dynamic judgment of the semantics of an event when the event is unfolding itself. A visualization of a video data stream using the above method can be generated continuously (over time) for an input video data stream. This type of video visualization is also called multi-field video visualization or *VideoPerpetuoGram* (VPG) throughout this application. A process to process a video data stream may be referred to as a pipeline, wherein the result of such a process may be referred to as VPG.
In principle, a VPG system may record and/or visualize (display or render) actions, events and/or motions or movements of objects or elements of a video data stream over time. In other words, a VPG system comprises a streamline representation of video, picture or image data elements, objects, or entities visualizing or representing actions and/or events of said objects as well as possible relationships among the objects and/or actions. In a VPG (system), a video data stream is depicted as a series of snapshots at a relatively sparse or dense interval, wherein in a first step of pipelining such a VPG, objects and their related attributes (e.g. actions and relationships) are recognized and extracted. In a subsequent step, the detected objects and attributes are highlighted with continuous abstract illustrations, wherein the illustrative visualization conveys multi-field information. Finally, a VPG is constructed from the highlighted continuous abstract illustrations with a video volume and illustrated with a shear in z-dimension and a parallel or orthographic projection to enable a continuous illustration.

**Fig. 2** shows an exemplary VPG system or multi-field video visualization 20 and a close-up view (i.e. a zoom in view) 20a of this video visualization 20 of a relatively small temporal segment or period of a video. The VPG 20 comprises a visualization highlighting movements of three different objects 22, 24, 26 extracted from the video.

By displaying video visualizations or VPGs 20 of attributes such actions and/or motions or movements corresponding to objects such as persons, video data streams can be quickly and efficiently evaluated and analyzed. Typical examples of video data streams which may require a quick and efficient evaluation and/or analysis are vast amounts of video data retrieved from surveillance camera devices such as shopping mall data sets, public transport and/or subway station data sets, parking lot data sets, prison data sets, and/or hospital data sets. A VPG 20 may therefore focus on visualizing actions and/or events and/or on emphasizing acting objects (e.g. persons) in a sequence of pictures or images such as a video.

Video visualization according to the present application may comprise one or more of the following advantageous aspects:

- A technical mechanism for integrating automatic video processing techniques with video visualization in a common framework for summarizing video data streams visually and dynamically is provided, advocating the needs for benefiting from the efficiency of automatic processing of large data streams, as well as from the abilities of human observers to disambiguate and comprehend complex events (actions and/or motions or movements of objects or elements) quickly, easily, and efficiently.
- A system for dynamic processing and visualization of action or event based video data streams is implemented, wherein a video data stream is represented as a series of snapshots of a video and/or video data stream at a relatively sparse interval and wherein actions, events, and/or moving objects are highlighted with continuous (abstract) illustrations such as visual mappings comprising color, symbols, and/or opacity.
- Actions, events, and/or relations of objects in video data streams are visualized over a long time span, which is based on a collection of short time span techniques for action or event detection and relation estimation.
- A design of multi-field visualization of raw (context) and processed (focus) information of image, picture and/or video data streams combining focus and context is provided. Based on a survey of different visual effects, a suitable set of visual mappings for highlighting multiple attributes of objects of video data streams comprising snapshots, object tracking, action classification, object relation and levels of plausibility is specified.
- A visual representation of a stream of two or three-dimensional data and/or information (e.g. a video data stream) is realized as both a dynamic video summary and a long term abstract record, wherein a GPU (graphics processing unit) - based implementation for generating such visualization is provided.

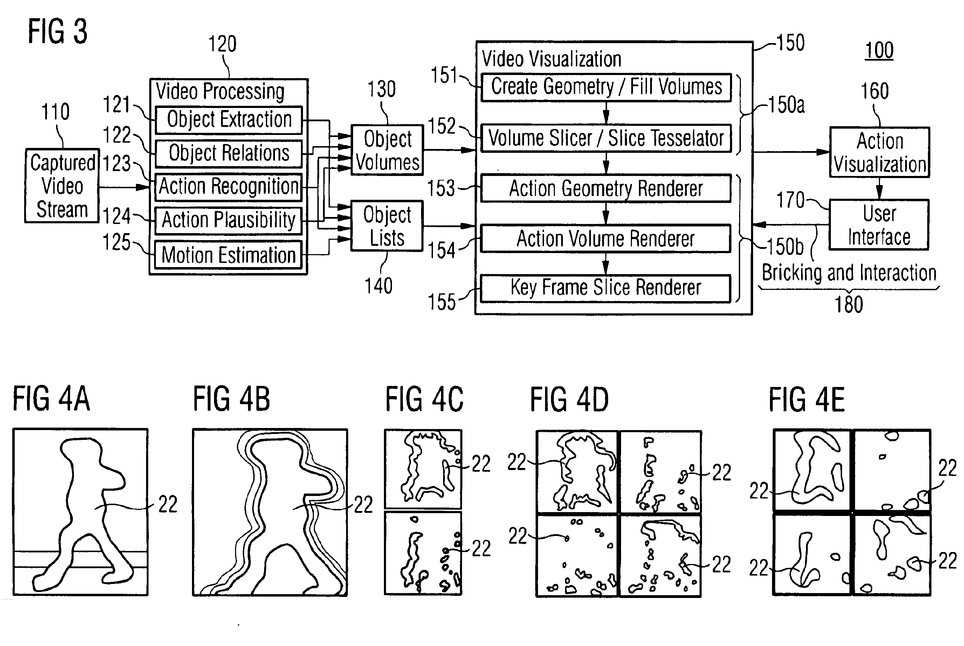

**Fig. 3** shows an exemplary overall architecture of a system for video visualization 100, which comprises two sub-systems 120 and 150 referred to as a video processing sub-system 120 and a video visualization sub-system 150. Basically, the system 100 captures 110 and processes 120 an input data stream (e.g. a video data stream), derives significant data and/or information 130, 140 and outputs 150, 160 a meaningful three-dimensional spatio-temporal visualization of objects and corresponding attributes (i.e. focus information) and/or context information (e.g. video frames) of the input data stream.

The video processing sub-system 120 comprises a plurality of processing modules 121, 122, 123, 124, 125, in particular an object extraction module 121, and object relations module 122, an action recognition module 123, an action plausibility module 124, and a motion estimation module 125. In one example, the video processing sub-system 120 receives at least one frame from a continuous data stream (e.g. a video (data) stream) 110 in a (possibly given) time-span. The video processing sub-system 120 then extracts several different objects and corresponding attributes of the frame using one or more of the processing modules 121, 122, 123, 124, 125 which comprise image processing filters or recognition filtering thereby focusing on object or element extraction and a classification of performed actions for recognized objects. In one implementation, a (action) recognition filter method is adapted and extended in order to compute a premise about at least one possible relation of objects in a scene of one or more frames of the data stream 110. The procession modules 121, 122, 123, 124, 125 are discussed in detail below.

One or more output files 130, 140 are produced by the processing sub-system 120. The output files 130, 140 comprise identifiers for each of the extracted objects and one or more attributes for the objects comprising center positions of each of the extracted objects, at least one action of at least one of the extracted objects with an estimated plausibility, at least one motion direction of at least one of the extracted objects, and one or more relations or relationships between the extracted objects.

The video visualization sub-system 150 receives the one or more output files 130, 140. The data and/or information comprised in the output files 130, 140 may also relate to focus information.

Based on the data and/or information comprised in the output files 130, 140, the video visualization sub-system 150 synthesizes a meaningful visual representation for the given time span of the frame of the data stream using one or more software modules 150a comprising a create geometry and/or file volumes module 151 and a volume slicer and/or slice tesselator module 152 as one example of a volume rendering and one or more of GPU modules 150b comprising an action geometry renderer 153, an action volume renderer 154, and a key frame slice renderer 155. Accordingly, the modules 150a, 150b may apply volume rendering in combination with glyph geometry and video snapshots or frames to the focus information received from the video processing sub-system 120.

By implementing a system for video visualization 100 as shown in Fig. 3, different actions events, motions or movements of objects or elements (e.g. people) detected in a scene of a video data stream can be clearly represented. Furthermore, possible relations between said objects can be emphasized or represented (e.g. a grouping of several people). Furthermore, a functionality of said system 100 utilizes in one exemplary implementation real-time visualization and an extended frame-by-frame volume bricking mechanism to enable the handling of large video data streams 110. A visualization framework implemented by the video visualization sub-system 150 is detailed described below.

In one exemplary implementation, the two sub-systems 120, 150 handling object extraction 121 from video data streams, computation of at least one motion-descriptor 125 using a recognition filter method and a classification of actions of the extracted objects 123, 124 may be computed (e.g. using MATLAB). Furthermore, the object relations filter 122 may be implemented in C++. The video visualization sub-system may be implemented in C++ and any graphics API (e.g. using Direct3D as the graphics API and HLSL as the GPU programming language).

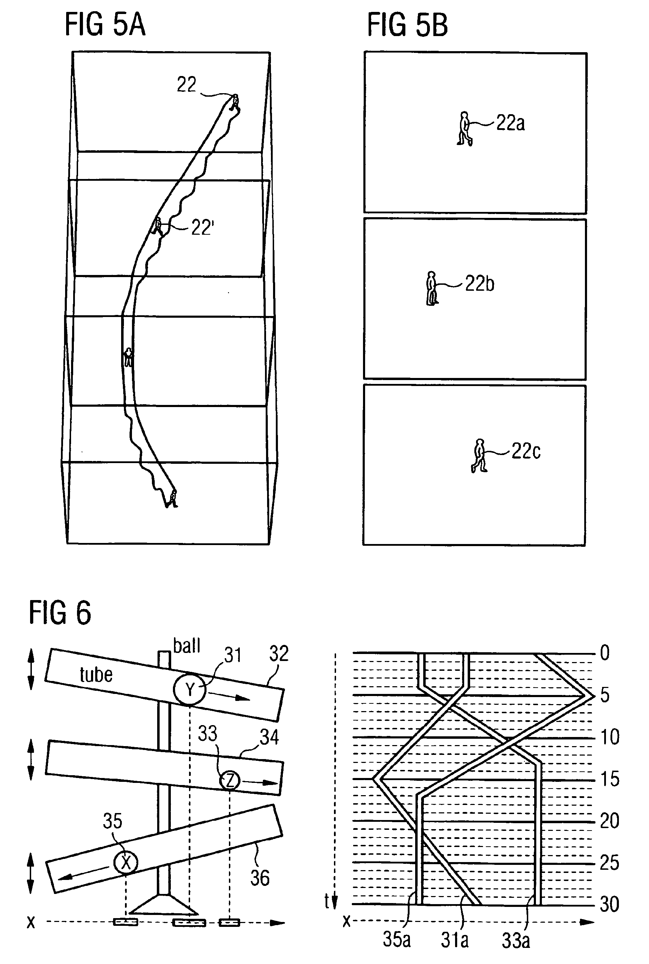

In the following, an exemplary implementation of the modules 121, 122, 123, 124, 125 of the video processing sub-system 120 is described with reference to **Figs. 4 and 5.**

In one example, a set of video data streams capturing different scenarios at the front of a shop entrance is used as an input video data stream 110. The video data stream 110 is accompanied by information such as action classification. In such a video data stream 110 objects 22, 24, 26 comprise human figures and attributes of the objects may be related to actions comprising basic motion types of the objects such as walking, and events or activities comprising activities of the objects such as entering the shop, walking together. Objects, actions, and events represent three different levels of complexity in video analysis. Furthermore, and in order to provide the video visualization sub-system 150 with additional information for perceptual and semantic reasoning, actions are further enhanced with motion types with directions, and provided detected actions with plausibility measurements.

Due to emphasis on dynamically processing and visualizing aspects of video data streams 110, the system 100 shown in Fig. 3 handles a small number of frames in the dynamic video data stream 110 rather than relying on storing and processing a large number of frames on the whole.

In one example, the action recognition filter method 123 implemented in the video processing sub-system 120 is based on analyzing the motion of an object 22 such as a human figure. The implemented action recognition filter method 123 is quite effective in discriminating between coarse-level actions, such as running or walking in different directions. In particular, said discriminations can be made from low-resolution video data, of the type which would be commonly found in a surveillance setting. Gleaning more subtle differences in motion, for example detailed analysis of the gait of a person, or suspicious or unusual behavior, remains a challenging problem in computer vision.

Initially, the video processing sub-system 120 receives a frame captured from a video data stream 110. The video processing sub-system 120 then starts by tracking and stabilizing at least one object 22 (e.g. a human figure) present in the frame, gaining a figure-centric spatio-temporal volume for the at least one object 22. Any residual motion within the spatio-temporal volume is due to the relative motions of different elements of the object 22 (e.g. different body parts of a human figure such as limbs, head, torso etc.). Said motion is then specified or characterized by a descriptor based on computing an optical flow, projecting it onto a number of motion channels, and blurring. Recognition 123 is performed in a nearest neighbor framework. The system 100 may be able to access a data storage device such as a database of previously seen or recognized (and possibly labeled) action fragments of at least one object. By computing a spatio-temporal cross correlation among the stored action fragments and at least one newly recognized action fragment, one action fragment most similar to the motion descriptor of the newly recognized (or queried) action fragment of the extracted object 22 can be determine in the video processing sub-system 120.

In one example, the video processing sub-system 120 comprises a motion analyzing algorithm. The motion analyzing algorithm 121 starts by computing a figure-centric spatio-temporal volume for at least one recognized object 22 (e.g. a human figure) in the frame from the video data stream 110. Such a (figure-centric spatio-temporal volume) representation of the at least one object 22 can be obtained e.g. by tracking the object 22 and then constructing a window in each frame centered at the object. Any of a number of tracking modules or trackers is appropriate as long as the tracking is consistent, for example a human figure (i.e. a person) in a particular body configuration should always map to approximately the same stabilized image, wherein the motion analyzing method used is robust to small jittering.

In other words, in a first step, the motion analyzing algorithm 121 computes at least one stabilized motion sequence for at least one object of the frame captured from a video data stream 110, i.e. a figure-centric spatio-temporal volume for the at least one object 22.

Once one or more motion sequences for one or more objects 22 are stabilized (i.e. stabilized figure-centric (motion) sequences for the objects 22 are computed), the motion sequences of the objects 22 are directly comparable in order to find correspondences among them. Finding or detecting similarity between different motions requires both spatial and temporal information. Therefore, motions of the objects 22 are described over a local time period in an aggregated set of features sampled in space and time in terms of corresponding motion descriptors (e.g. spatio-temporal motion descriptors). Computing such motion descriptors enables the system 100 to compare frames from different motion sequences possibly corresponding to different objects based on local motion characteristics.

In the following, an exemplary implementation of the motion descriptors is provided. It should be understood, that also alternative implementations may be used with the invention.

After at least one stabilized figure-centric sequence for at least one object 22 is computed, an optical flow at each frame, e.g. using the Lucas-Kanade algorithm is computed as shown in Fig. 4B from a (video) picture as shown in Fig. 4A. Using the Lucas-Kanade algorithm, an optical flow vector field F is first split into two scalar fields corresponding to the horizontal and vertical components of the flow, $F_x$ and $F_y$, each of which is then half-wave rectified into four non-negative channels $F_x^+, F_x^-, F_y^+, F_y^-$, so that $F_x = F_x^+ - F_x^-$ and $F_y = F_y^+ - F_y^-$ as shown in Figs. 4C and 4D. These two scalar fields $F_x$ and $F_y$ are each blurred with a Gaussian and normalized to obtain the final four channels $\hat{F}b_x^+, \hat{F}b_x^-, \hat{F}b_y^+, \hat{F}b_y^-$ of the (spatio-temporal) motion descriptor for each frame for the object 22 as shown Fig. 4E.

In an alternative implementation of the motion analyzing algorithm and optical flow computation, more than four motion channels may be used, wherein each channel is supposed to be sparse and non-negative.

In one example, spatio-temporal motion descriptors of objects are compared using a version of normalized correlation in order to compute similarities among them. If the four motion channels for a frame $i$ of a (spatio-temporal) motion sequence $A$ are $a_1^i, a_2^i, a_3^i$ and $a_4^i$, and similarly for a frame $j$ of a (spatio-temporal) motion sequence $B$ then the similarity between (spatio-temporal) motion descriptors centered at frames $i$ and $j$ is:

$$S(i,j) = \sum_{t \in T} \sum_{c=1}^{4} \sum_{x,y \in I} a_c^{i+t}(x,y) b_c^{j+t}(x,y)$$

where $T$ and $I$ are the temporal and spatial extents of the motion descriptor respectively. To compare two sequences $A$ and $B$, the similarity computation will need to be done for every frame of $A$ and $B$ so the above equation can be optimized in the following way. First, a frame-to-frame similarity matrix of the blurry motion channels (the inner sums of the equation) is computed between each frame of $A$ and $B$. A matrix $A_1$ is defined as the concatenation of $a_1$'s for each frame stringed as column vectors, and similarly for the other three channels. Then the frame-to-frame similarity matrix is

$$S_{ff} = A_1^T B_1 + A_2^T B_2 + A_3^T B_3 + A_4^T B_4$$

To obtain the final motion-to-motion similarity matrix $S$, we sum up the frame-to-frame similarities over a temporal window T by convolution with a $\|T\| \times \|T\|$ identity matrix, thus $S = S_{ff} * I_T$.

For example, if a novel motion sequence for at least one object 22 shell be classified and a database of labeled example actions is accessible, initially, a motion similarity matrix is constructed or computed as described above. For each frame of the novel sequence, the maximum score in the corresponding row of this matrix will indicate the best match to the motion descriptor centered at this frame. Now, classifying this frame using a k-nearest-neighbor classifier is simple: find the $k$ best matches from labeled data and take the majority label. A result of this classification is shown for three different actions (i.e. walking to the left 22a, standing or not moving 22b, walking to the right 22b) of the extracted object 22 in Fig. 5B, and shown as volume representation of a motion sequence 22' of the object 22 for a time-span in Fig 5A, without any applied visual mapping technique.

The above described procedure implemented in terms of the motion analyzing algorithm for classifying actions 22a, 22b, 22c of objects 22 captured from a video data stream 110 of the video processing sub-system 120 also results in an object-oriented action list, where for each object x, there is a vector of measurements characterizing the actions of $x$ at a discrete temporal point $t$ (where $t$ is a natural number), $X(t)=[x_1(t),x_2(t),...,x_n(t)]^T$. One can recognize that $X(t)$ is a discrete multivariate time series and each $x_i(t)$ is its elementary time series. The measurement of $x_i(t)$ can be *nominal* (e.g., names for categorizing actions), *ordinal* (e.g., the importance rank order of $x$), *interval* (e.g., motion speed of $x$), *ratio* (e.g., plausibility measurement). Some of these measurements are grouped together to form composite measurements, such as coordinates, motion directions, bounding box, etc.

In the following, an exemplary implementation of possible filtering methods that can be used with the present invention is provided. It should be understood, that also alternative implementations comprising more sophisticated filters may be used with the invention.

In principle, there is no general assumption that elementary time series are independent of each other, their correlation dimensionality is known, or they possess special statistical properties, such as periodicity and persistence. Several principle methods in time series analysis can be adopted in the video processing sub-system 120 comprising *filtering, moving average, cross-correlation*, and *power of time series*, which are described in detail below.

Examine the feasibility of visualizing complex events, such as the possibly related actions of objects 22 in a scene, is supported by drawing a viewers' attention to the possibility of such relations, rather than informing the viewer of an explicit conclusion which can be very unreliable in general. When real-time processing of video data streams is considered, the visualization needs to be updated dynamically, with only the access to video data in a relatively short time span.

Without losing generality, in the following, only relations between two time series X(t) and Y(t) representing the actions of objects $x$ and $y$ respectively are considered.

Time-invariant relation filters (or filtering) generate a new time series, $r_{x,y}(t)$, or $r(t)$ in short. Each of its elementary time series, $r_i(t)$ is a function of one or more elementary time series of $X(t)$ and $Y(t)$, and measures the probability if actions of $x$ and $y$ may be related in a specific aspect. The time-invariance implies that if there is a filter $F$ such that $F(a(t)) = b(t)$, we also have $F(a(t + h)) = b(t + h)$ for any $h$ being a natural number. Nevertheless, there is no restriction as to the linearity and the size of the time window of each filter.

Let $P_x(t)$ be a composite time series representing the centroid of an object $x$, $V_x(t)$ be its motion direction, $B_x(t)$ be its bounding box, then the following set of example filters may be implemented in the video processing sub-system 120.

*Closeness $r_C(t)$*. Let $d_{max} > 0$ be a constant, and $D$ be the Euclidean distance function between two points, then

$$r_C(t) = \begin{cases} 0, & \text{if } D\big(P_x(t),P_y(t)\big) \geq d_{max} \\ 1 - \dfrac{D\big(P_x(t),P_y(t)\big)}{d_{max}}, & \text{otherwise.} \end{cases}$$

*Moving in similar directions $r_o(t)$*. The use of an alternative description is also possible. Let $\theta$ be the angle between vectors $V_x(t)$ and $V_y(t)$ which can be obtained trivially, then

$$r_D(t) = \max\big(0, \cos(\theta)\big)$$

*Moving with similar speeds $r_s(t)$*. Let $\| \: \|$ denote the magnitude of a vector, and $s_{max} > 0$ be a constant, then

$$r_S(t) = \begin{cases} 0, & \text{if } \big| \|V_x(t)\| - \|V_y(t)\| \big| \geq s_{max} \\ 1 - \Big| \dfrac{\|V_x(t)\| - \|V_y(t)\|}{s_{max}} \Big|, & \text{otherwise.} \end{cases}$$

*Overlapping of bounding boxes $r_A(t)$*. Let $A$ be an area function, and $\cup$ and $\cap$ denote the spatial union and intersection of two bounding boxes, then

$$r_A(t) = \frac{A\big(B_x(t) \cap B_y(t)\big)}{A\big(B_x(t) \cup B_y(t)\big)}$$

*Moving towards each other $r_T(t)$.* Let $\theta_{x \to y}$ be the angle between vector $V_x(t)$ and $P_y(t)-P_x(t)$, $\theta_{x \to y}$ be the angle between vector $V_y(t)$ and $P_x(t)-P_y(t)$, and $\upsilon_{max} > 0$ be a constant, then

$$r_T(t) = \begin{cases} 0, & \text{if } \theta_{x \to y} \le 0 \vee \theta_{y \to x} \le 0 \\ 1, & \text{if } \theta_{x \to y} > 0 \wedge \theta_{y \to x} > 0 \wedge \upsilon \ge \upsilon_{max} \\ \upsilon, & \text{otherwise,} \end{cases}$$

With $\upsilon = \cos(\theta_{x \to y})\|V_x(t)\| + \cos(\theta_{y \to x})\|V_y(t)\|$. $\upsilon$ is the combined velocity of $V_x(t)$ and $V_y(t)$ modulated by $\cos(\theta_{x \to y})$ and $\cos(\theta_{y \to x})$, respectively.

Moving averages is an efficient technique for computing dynamic properties of a time series. This technique can be applied to an elementary time series prior to, or after the filtering as previously described. In one example, an exponential moving average technique is employed, which minimizes the need for the system 100 to memorize records of a previous time span.

$$\overline{r}(t_0) = r(t_0)$$

$$\overline{r}(t) = \alpha r(t) + (1 - \alpha)\overline{r}(t - 1).$$

where $0 \le \alpha \le 1$. In one example, $\alpha = 0.5$ is chosen.

Some useful indicators of a relation are in the form of *cross correlation*, which evaluates covariance between two random vectors. For example, cross correlation may be used to examine or determine if a corresponding time series of two objects are following the same trend. In one example, the Pearson product moment correlation coefficient is implemented. For a time span *[t-h, t]*, and two corresponding time series, *x(t)* and *y(t)* (which can be original or resulting from filtering), then:

$$r_{Pearson}(t) = \frac{1}{h}\sum_{t-h}^{t} z_x(i)z_y(i)$$

where $z_x(i)$ and $z_y(i)$ are the standard scores of x(i) and y(i) in the time span *[t-h, t]*. According to the above equation, a larger time span will require relatively more computation resources.

The power of a time series, $E(x(t),t_1,t_2)$, over a time span *[t₁,t₂]* indicates the energy of the 'activity' during that period. In one example, the notion of average energy of a time series is used, giving

$$\mathrm{E}(x(t),t_1,t_2) = \frac{1}{h}\int_{t_1}^{t_2} x^2(t)dt \approx \frac{1}{h}\sum_{t_1}^{t_2} x^2(t).$$

The power of a multivariate time series, *r(t)* is defined as the weighted average of the energy of its individual elementary time series, that is:

$$E(r(t), t_1, t_2) = \frac{\sum_i \omega_i E(r_i(t), t_1, t_2)}{\sum_i \omega_i}.$$

According to the above described functions, one or more attributes of objects or elements extracted from which may be obtained through video data processing 120 comprising object identifier, position, size, action type, inter-object relation, and certainty and error margins of the analytical results. Such processed information may vary in terms of its amount and variety in different applications or implementations of video processing 120. Since video visualization performed through system 100 aims at highlighting specific pieces of processed information against raw imagery information, designing and selecting a suitable combination of visual mappings for conveying multiple attributes may be crucial to effective and efficient use of the design space of visualization.

Different visual effects, such as color, luminance, scale and symbols, in visualization extracted objects (e.g. objects 22, 24, 26) in time and space from captured video data streams 110 in order to create multi-field video visualization may be applied to the objects 22, 24, 26 and corresponding actions and/or attributes (e.g. actions 22a, 22b, 22c).

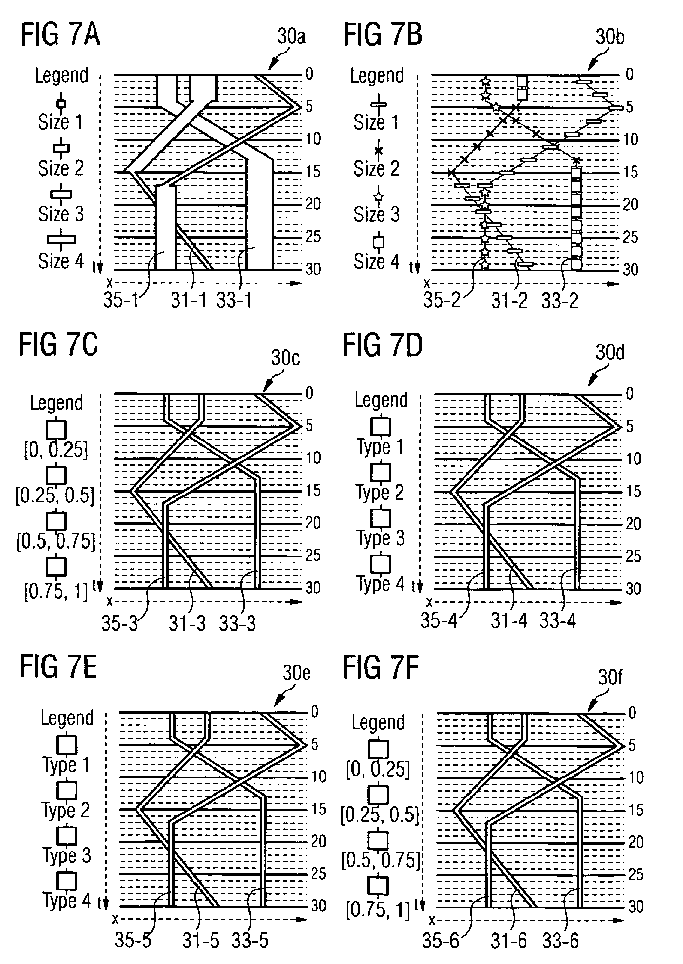

In the following, different exemplary visual or visualizing effects for visualizing extracted video data (e.g. objects and related attributes and/or actions) using the above described video data processing methods 120 are described with reference to **Figs. 6 and 7.**

**Fig. 6** shows a simple temporal scenario capturing essential aspects of action-based video data, wherein one or more objects, e.g. balls 31, 33, 35 are placed in one or more corresponding horizontal mounted tubes 32, 34, 36, whereby each tube 32, 34, 36 can swing slightly up and down independently, causing the balls 31, 33, 35 to roll left or right. An x-coordinate of the central position 31 a, 33a, 35a of each ball 31, 33, 35 is recorded over a period of time *t*. Further, each ball 31, 33, 35 is associated with three additional attributes 31-1, 33-1, 35-1 to 31-6, 33-6, 35-6 as visualized in Figs. 7A to 7F, for example representing the following three categories of information, respectively:

- Geometric attribute 31-1, 33-1, 35-1, 31-2, 33-2, 35-2: a numerical value, such as the size or diameter of the ball 31, 33, 35.
- Semantic classification 31-3, 33-3, 35-3, 31-4, 33-4, 35-4: normally an enumerated value, such as the type or owner of the ball 31, 33, 35.
- Statistical indicator (or statistical attribute certainty or plausibility) 31-5, 33-5, 35-5, 31-6, 33-6, 35-6: a numerical value without an intrinsic geometrical meaning. The recorded information is associated with a statistical value, which may be used to indicate certainty, or importance of the recording. In one example, the statistical indicators may fall into the range of [0, 1].

Over the recording period *t*, the three attributes may vary, for example at least one of the balls 31, 33, 35 may change its type and/or size. In one example, for each of the attributes at least six types of visual mappings comprising color, luminance, opacity, thickness, symbols and textures, are considered giving a total of 18 different attribute-mapping pairings.

**Fig. 7** shows six examples of the 18 pairings, wherein each of the attributes is limited to four nuances in order to minimize the diversity of the illustrations. In Fig. 7A corresponding geometric attributes 31-1, 33-1, 35-1 of each of the balls 31, 33, 35 are represented or visualized by a visual mapping using thickness 30a. Accordingly, the thickness-based visualization 30a shows actions of each of the balls 31, 33, 35 with respect to the balls' 31, 33, 35 respective center positions over *x* over a recorded period of time *t* as well as changes in their corresponding geometry attributes 31-1, 33-1, 35-1 over the time period *t*. In Fig. 7B corresponding geometric attributes 31-2, 33-2, 35-2 of each of the balls 31, 33, 35 are represented or visualized by a visual mapping using symbols 30b. Accordingly, the symbols-based visualization 30b shows actions of each of the balls 31, 33, 35 with respect to the balls' 31, 33, 35 respective center positions over *x* over a recorded period of time *t* as well as changes in their corresponding geometry attributes 31-2, 33-2, 35-2 over the time period *t*. In Fig. 7C corresponding semantic attributes 31-3, 33-3, 35-3 of each of the balls 31, 33, 35 are represented or visualized by a visual mapping using color 30c. Accordingly, the color-based visualization 30c shows actions of each of the balls 31, 33, 35 with respect to the balls' 31, 33, 35 respective center positions over *x* over a recorded period of time *t* as well as changes in their corresponding semantic attributes 31-3, 33-3, 35-3 over the time period *t*. In Fig. 7D corresponding semantic attributes 31-4, 33-4, 35-4 of each of the balls 31, 33, 35 are represented or visualized by a visual mapping using opacity 30d. Accordingly, the opacity-based visualization 30d shows actions of each of the balls 31, 33, 35 with respect to the balls' 31, 33, 35 respective center positions over *x* over a recorded period of time *t* as well as changes in their corresponding semantic attributes 31-4, 33-4, 35-4 over the time period *t*. For the opacity-based visualization 30d of the corresponding semantic attributes 31-4, 33-4, 35-4, a noisy background pattern is used to facilitate perception of different levels of transparency. When using a monochrome background instead, the opacity-based visualization 30d would have a similar effect as a luminance-based mapping for visualization of at least one attribute of at least one object. In Fig. 7E corresponding statistical attribute certainties 31-5, 33-5, 35-5 of each of the balls 31, 33, 35 are represented or visualized by a visual mapping using luminance 30e. Accordingly, the luminance-based visualization 30e shows actions of each of the balls 31, 33, 35 with respect to the balls' 31, 33, 35 respective center positions over $x$ over a recorded period of time $t$ as well as changes in their corresponding statistical attributes 31-5, 33-5, 35-5 over the time period $t$. In Fig. 7F corresponding statistical attribute certainties 31-6, 33-6, 35-6 of each of the balls 31, 33, 35 are represented or visualized by a visual mapping using textures 30f. Accordingly, the textures-based visualization 30f shows actions of each of the balls 31, 33, 35 with respect to the balls' 31, 33, 35 respective center positions over $x$ over a recorded period of time $t$ as well as changes in their corresponding statistical attributes 31-6, 33-6, 35-6 over the time period $t$.

In one example, an inquiry of (professional, in particular persons skilled in the field of visualization techniques) users is made to score the different visualization mappings 30a to 30e described above with reference to Fig. 7. In this way an optimized multi-field visualization of extracted elements from video data stream combining different visual mappings 30a to 30e can be specified and/or implemented. For example, if highlighting three attributes of at least one object simultaneously in the same visualization, one (substantially) optimal combination is to use color for type, luminance for certainty and thickness for size. However, it may not be straightforward to combine some mappings in the same visualization, for example color with symbols, luminance with thickness and so on. Solutions to those difficulties are described below.

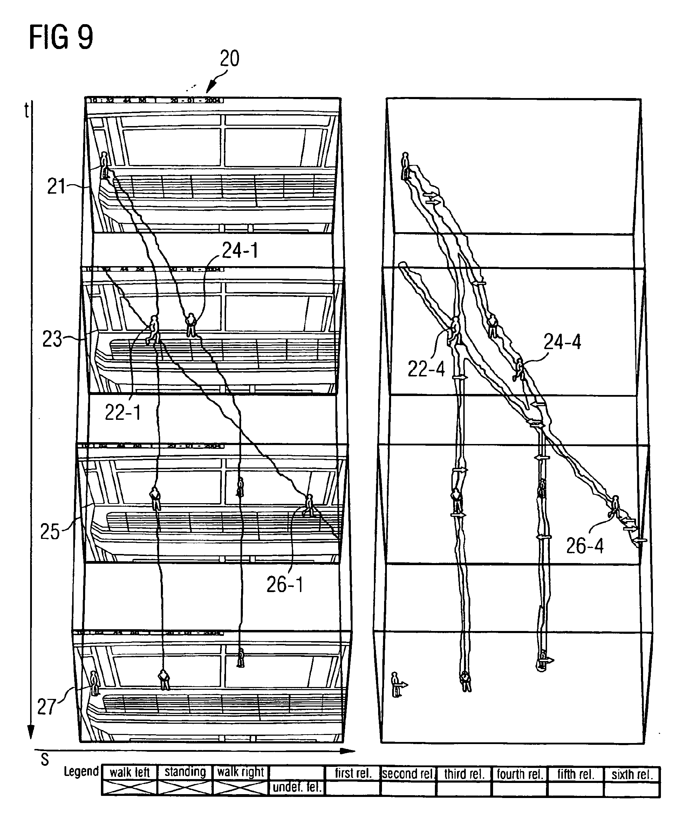

Based on the above discussed visual mappings 30a to 30e of attributes and/or actions of objects extracted from video data stream 120, a multi-field (video) visualization (comprising a renderable representation) in particular in terms of a VPG 20 is computed by the video visualization sub-system 150. The multi-field visualization should be able to visualize a plurality of attributes possibly of (characterizing or describing) different objects 22, 24, 26 extracted from a video data stream 120 by the action recognition (filtering) method of the video processing sub-system 120. The attributes may comprise geometric information (e.g. the position of an object and its size), semantic information (e.g. an action type and one or more relationships between extracted objects), and/or statistical information (e.g. a plausibility of a recognized action or relationship). In addition to (video data) attributes of extracted objections, the video visualization sub-system 150, a correspondence 20b between extracted video elements and/or information such as objects 22, 24, 26 and related attributes and one or more original video data (key) frames 21 of the (original) video data stream 110 as shown in Fig. 9. In one example, focus-and-context visualization techniques are employed to combine a display of attributes of extracted objects 22, 24, 26 (or extracted attributes) with original video data frames 21, wherein the object attributes 22, 24, 26 characterize a focus and the frames 21 characterize or describe a context.

In the following, visual mappings for focus information such as extracted objects or elements 22, 24, 26 and their recognized attributes is described comprising object position and size, action type, relationship information, and plausibility.

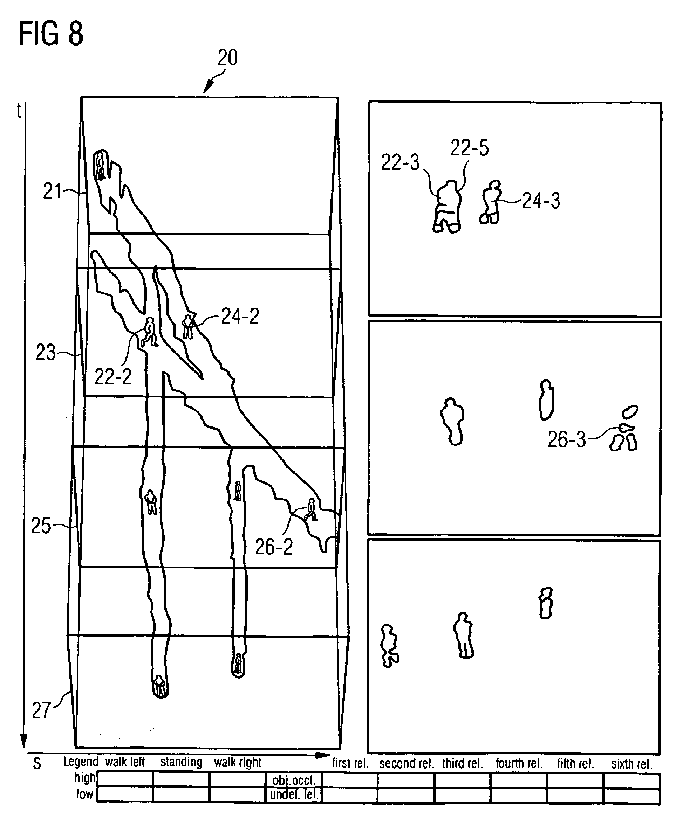

With reference to **Fig. 8,** a multi-field video video visualization or VPG 20 is linked to or connected with a space-time of a video data stream 110 using the vertical axis $t$ for time and the horizontal s for the horizontal spatial dimension of video frames 21, 23, 25, 27. A second spatial video dimension is essentially mapped to the vertical axis by tilting the video frames 21, 23, 25, 27. Hence, the mapping of the geometry of space-time is fixed to that interpretation of the axes of the visualization image. Therefore, an appropriate mapping of object positions 22-2, 24-2, 26-2 is to respective spatial coordinates in the multi-field video video visualization or VPG image 20. Fig. 8 shows an example where object positions 22-2, 24-2, 26-2 are marked by thick bands and Fig. 9 shows another example that uses only a thin curve to indicate the center of the object's position 22-1, 24-1, 26-1.

In Fig. 8 a thickness-based visual mapping for objects 22, 24, 26 and their related position and size attributes is used, wherein a thickness of the object's trail 22-2, 24-2, 26-2 reflects a projected size of each of the objects 22, 24, 26. In an other example, the size of an object may not be visualized possibly depending on user preference.

In addition or instead of an object position and size attribute of an extracted object 22, 24, 26, a type of action attribute corresponding to each of the objects 22, 24, 26 can be visualized. As it is the case for object position and size attributes, type of action attributes are recognized and extracted during video data processing 120 possibly using the above described action recognition filtering method. In one example, as shown in Fig. 8, a color-based visual mapping for type of action attributes 22-3, 24-3, 26-3 of extracted objects 22, 24, 26 is used. The color-based visual mapping is applied to a trail of each of the objects 22, 24, 26 in order to couple corresponding object position attributes 22-2, 24-2, 26-2 and action type attributes 22-3, 24-3, 26-3.

Usually, the number of action types is small, e.g. in a range of some ten types, so that the perceptual grouping through color hue can be used to clearly distinguish different actions. Fig. 8 (right) illustrates an effect of color-based visual mapping for single frames 21, 23, 25, based on the color table, given as legend under the figure, wherein orange describes walk to the right, yellow describes walk to the left, green describes standing and dark grey describes overlapping.

With reference to **Fig. 9,** an alternative visual mapping for type of action attributes using symbols is shown. The action type attributes 22-4, 24-4, 26-4 of the objects 22, 24, 26 are rendered using a glyph-based visualization, wherein glyphs are distributed along trails of the objects 22, 24, 26, indicating corresponding action types 22-4, 24-4, 26-4 at respective space-time positions, wherein a design of the glyphs may adopt established icons from flow visualization such that arrows may indicate a motion direction and a square icon may indicate an object at rest.

In one example, relationship data attributes may be attached to the extracted objects 22, 24, 26 in addition to one or more of the above introduced attributes. The strength of relationships between at least two objects 22, 24 may be based on their distance, relative speed, relative direction of motion, size of their bounding boxes, and/or overlap of their bounding boxes. In one video data visualization, relation information attributes may be displayed together with action type attributes of one or more objects 22, 24, 26 using a color-based visual mapping for both attributes. Color may be particularly suited for relation visualization because color is effective in building visual correspondence and grouping.

In order to handle visualization or representation of more than one attribute of at least one object 22, 24, 26 using the same visual mapping, e.g. color, following strategies may be employed. In a first strategy, colored (image) regions may be spatially separated as exemplary shown in Fig. 8, wherein action type attributes 22-3, 24-3, 26-3 are shown by color attached to the center of the object's trail, whereas relation(ship) information or data 22-5 s color-coded within a surrounding silhouette line. Fig. 8 (right) shows that the relation data 22-5 forms a silhouette around the action type representation 22-3. A color table for these relation silhouettes is shown in the legend of Fig. 8. For example, the red silhouette indicates the relation of two objects 22, 24 entering a visualized scene, and walking besides each other. Accordingly, relatively more visualization space is needed for spatial separation. Therefore, this strategy is appropriate if enough screen space is available. In a second strategy action type attributes are rendered using another visual mapping than the color-based visual mapping which is however used for visualization of relationship information. In one example, a symbols-based visual mapping using glyphs is then used for rendering the action type attributes 22-4, 24-4, 26-4 as shown in Fig. 9 wherein the colored traces represent relations among the objects 22, 24, 26, whereby the action type attributes 22-4, 24-4, 26-4 are mapped on different glyphs.

Using visualization for video analysis may overcome the drawback of computer-vision techniques comprising action recognition methods that those techniques are not always capable of fully analyzing videos with high certainty. Due to this fact, the action recognition algorithms as discussed above provide a certainty or plausibility attached to recognized action types and/or relation information of extracted objects 22, 24, 26. Accordingly, in one example, certainties or plausibilities for action type attributes and/or relation information attributes are attached to at least one of those attributes as statistical attributes during video visualization 150. In one example, a thickness-based visual mapping is used for statistical attributes. In another example, a color-based visual mapping is used for statistical attributes.

As shown in Fig. 8, a color-based visual mapping for statistical attributes of the objects 22, 24, 26 is applied, which uses saturation to indicate plausibility or certainty, wherein high saturation corresponds to a high certainty, low saturation to a low certainty. Accordingly, two different saturation levels are sufficient for an accurate visual discrimination. The statistical attributes are mapped to a quantized saturation value by thresholding. The advantage of the saturation mapping is that it can be immediately combined with a (color) hue-based visual mapping. In Fig. 8, both action type attributes 22-4, 24-4, 26-4 (rendered in the main trail) and relation information 22-5 (rendered through the silhouette regions) are encoded by (color) hue. In this case, the statistical attributes (denoting plausibility) for action type attributes 22-4, 24-4, 26-4 and relation information 22-5 are mapped to respective saturation values.

Attributes for extracted objects 22, 24, 26, such as object position and size attributes, action type attributes, relation information, and statistical attributes may be sufficient to communicate (by representation or visualization) performed actions of objects and their relations or relationships in a scene at any given time extracted from a video data stream 110. However said attributes are restricted in the amount of detailed information they can convey because visual information about a spatial context of an environment (i.e. an original scene from the video data stream) may be lacking or missing. For example, without providing any spatial context information in addition to the extracted objects visualized along with one or more corresponding attributes, it might be difficult to say where exactly an object is located in a scene at a certain time step. To increase the amount of information communicated to the viewer, and thus enhance the understanding of the events in the scene, a set of additional visualization options that facilitate the display of surround information or a spatial context of an environment is supported by the video visualization sub-system 150. This additional visualization is combined with a focus visualization of (video) attributes for extracted objects 22, 24, 26 in a focus-and-context approach.

Original frames of a video from a video data stream may contribute (substantially) the most (spatial) context information possible. Frames may pull together extracted objects 22, 24, 26 and their surrounding. Furthermore, they may indicate important static objects in the scene (e.g. a door or an obstacle) that might cause the objects 22, 24, 26 to act in a certain way. Fig. 9 shows a placement of one or more (video) frames 21, 23, 25, 27 as snapshots at any position in the volume. A useful number of snapshots that can be displayed simultaneously may be determined depending on an available screen space. For example, one or more frames 21, 23, 25, 27 should be so far apart that they do not overlap on a final visualization image. Furthermore, a different viewing angle and a sheared volume in z-dimension may minimize the problem of overlap and self-occlusion. In one example, an inclination of 49 degrees in the z-axis, with a shear of 45 degrees in the same dimension and orthogonal or parallel projection.

A combined focus-and-context visualization or rendering may be achieved by blending the frames 21, 23, 25, 27 with a depth-dependent alpha value over the visible volume signature. Depth-dependent blending enhances depth perception. One or more objects 22, 24, 26 that are visible in a snapshot may be rendered or visualized with full opacity in order to stand out from the background.

A path of each of the objects 22, 24, 26 evolving in time may be reconstructed by tracing a line 22-1, 24-1, 26-1 through each of the objects' 22, 24, 26 centers in each of the frames 21, 23, 25, 27 where the objects 22, 24, 26 appear as shown in Fig. 9. This may be useful to keep track of objects that can occlude each other, if their paths are crossing and to visually enhance the progress of time, which increases from back to front along the z-axis (equivalently from top to bottom).

In one implementation, CPU and GPU (programmable graphics processors) methods are used to efficiently visualize objects and corresponding attributes (i.e. focus information) of video data streams in combination with context information are employed in order to achieve a real-time rendering or visualization. The visualization framework may be built upon a volume renderer modified for video volume rendering. An advantage of this framework is its separation of different visualization aspects into different software components or modules 150a.

In the following, technical details of action-based video rendering modules 150b used to generate two different visualization styles are introduced. Furthermore, a generation or production a continuous (multi-field) video visualization

In one implementation, constructing opaque silhouettes around opaque object traces 22-5 of a video data stream is managed by a two-pass GPU-rendering procedure. Both information the silhouette 22-5 with the object relation and the thereof enclosed region 22-4, holding the action type are stored in every single video frame, as shown in Fig. 8 (right). By volume rendering both information in one pass, the opaque silhouette 22-5 would completely occlude the interior action information 22-4. In order to show both attributes simultaneously, first the complete volume is rendered and then only blending the relation silhouettes 22-5 to the framebuffer. Then, in the second pass, the whole volume is rendered again, but this time only the interior 22-4 is blended as opaque color to the framebuffer, generating the desired result.

An advantage of this technique is the good structured visual result, with the clear separable inner and outer regions. Since the volume has to be rendered twice, a drawback is the bisection of rendering performance, making this technique not very useful for a real-time system that could be build with today's hardware.

Regarding the issues of the prior technique, another combination of visual mappings may be applied, guided by the expert survey, to enhance the system. This technique, as shown in Fig. 9 (right), is implemented as volume rendering with additional glyphs to indicate the objects action 22-4. For this technique, the volumetric representation of the object trace 22-1 indicates the relation of objects, illustrated with the same color. The plausibility of the relation is mapped on the thickness of the trace, thereby neglecting the size of the objects itself. When tracking one kind of objects (e.g. persons) that all are nearly equal sized this choice may be adequate.

The motion glyphs 22-4 are generated on the CPU and rendered as opaque geometry over the object traces, whereby a square represents a standing object, and an-ows indicate a walk left or walk right respectively. This technique has an advantage, that it maps both information to different visual attributes and achieves high framerates that are required for a real-time application. However, due to noise in the extracted video frames, that can cause many small changes in the action recognition, e.g. multiple changes from left to right caused by a standing (i.e. not moving) object that is slightly fluctuating, this can lead to a multitude of rendered glyphs that occlude each other. This may be overcome by thresholding with a user defined value. The threshold regulates the maximum relative change of an object between two frames, required to generate a glyph at this location.

To prepare the framework for live video streaming and thus a real-time update of the visualization display, the system supports a bricking mechanism. This technique uses five 3D volume textures, with attached z-texture coordinates in the interval [0,1], resulting in a range of 0.2 for each texture.

For rendering VPGs, projection parameters of the above described visualization framework are changed and/or modified. Similar shear and inclination of the volume as for the other results are used, but in combination with a parallel projection. This enables the system, to continuously render the incoming video data stream, writing the visualization result to an output buffer. For every n incoming video frames (in one example n may equals 200), an image is rendered, where the middle section (including the second and third key-frames) is cut out and appended to the last rendering result, thus generating an endless output stream of a video. Using this technique, it is now possible to see all the performed action sequences and relations that appeared in a video in one continuous illustration at one glance.

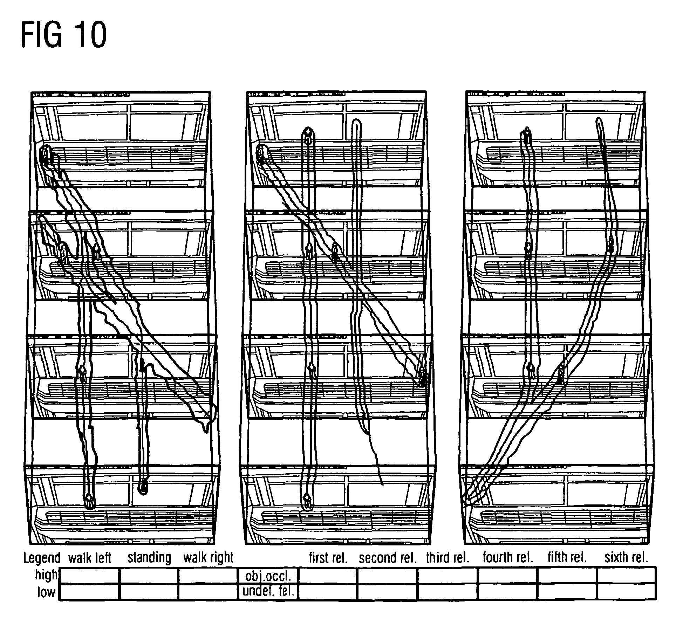

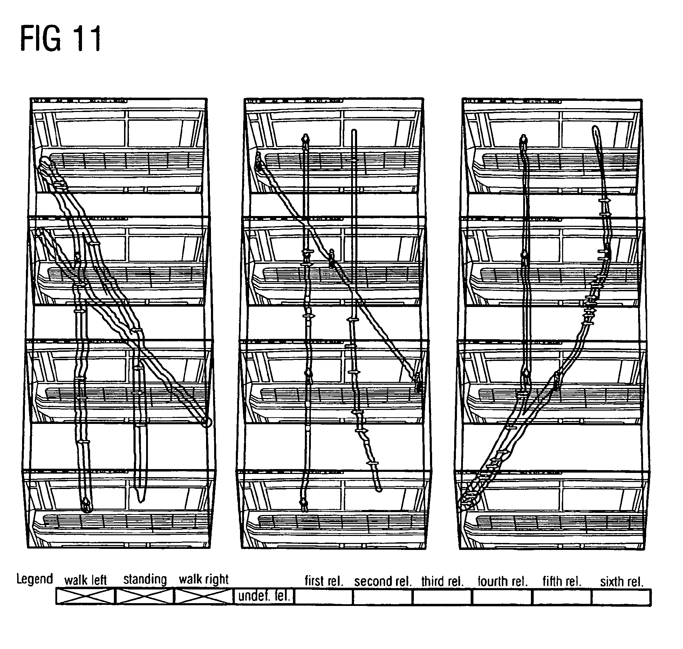

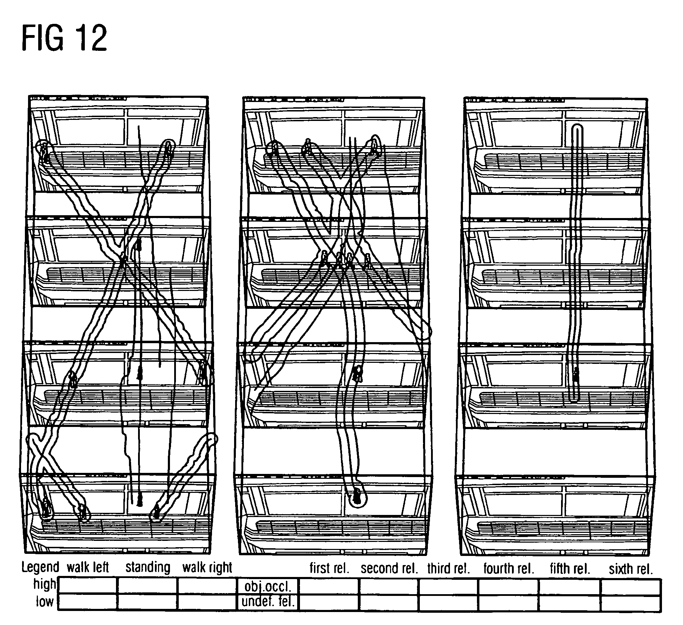

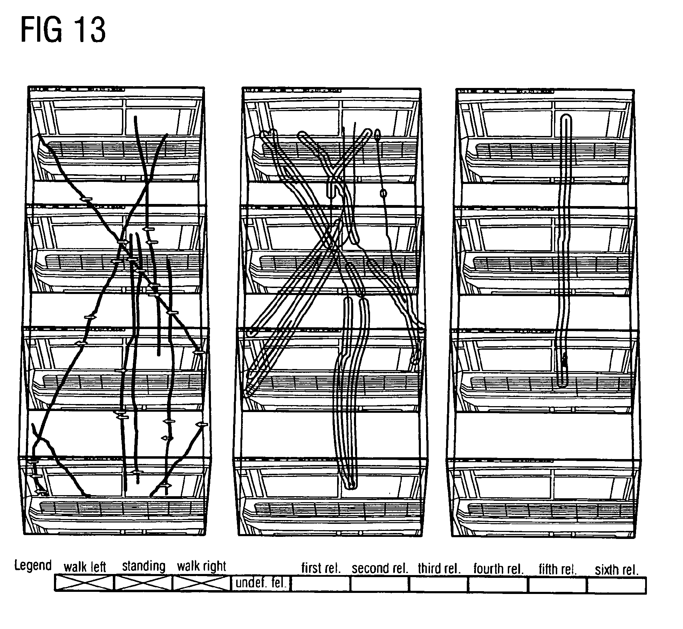

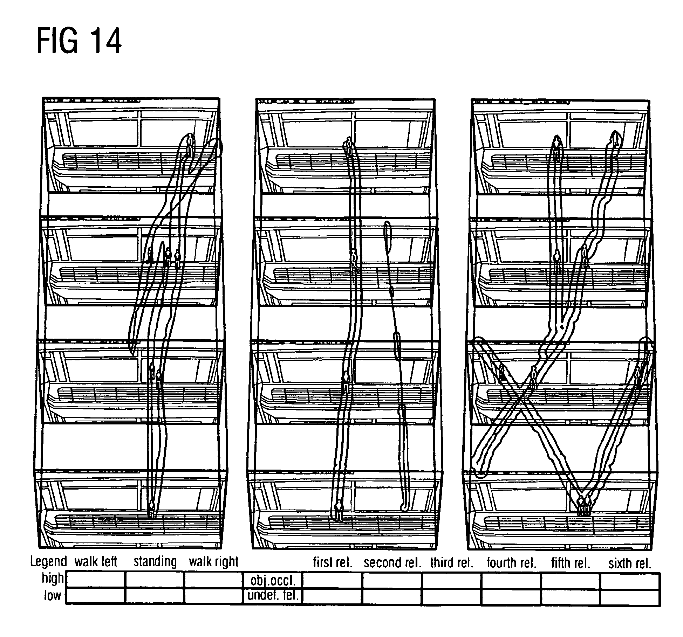

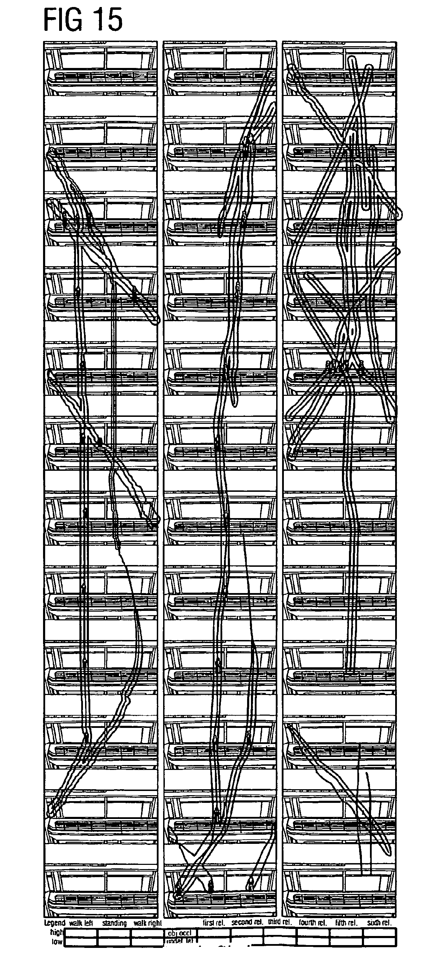

A video data visualization in terms of a VPG 20 of extracted objects 22, 24, 26 and corresponding attributes as described above with reference to Figs. 8 to 15 may have one or more of the following advantages: The computed video data visualization 20 facilitates a continuous depiction along a temporal axis (in a specified period of time) of extracted information comprising objects or elements 22, 24, 26 and corresponding attributes and/or actions and key frames 21 for a video data stream 110 having an arbitrary length. Furthermore, the video data visualization 20 provides a good visibility of motion traces 22-1, 24-1, 26-1 along the temporal axis to facilitate the comprehension of temporal behavior of the objects 22, 24, 26. The video data visualization 20 makes maximum use of the available screen space in the x-y dimension, thereby conveying context information in an intuitively recognizable form but without neglecting a focus. Additionally, the system 100 makes use of effective different visual attributes to illustrate focus information in different categories.

In other words, the system 100 for video data element and/or object 22, 24, 26 extraction comprising attributes, actions, and/or events as well as relationships among the objects 22, 24, 26 from video data streams 110 combines context and focus information of the extracted data and/or information in an appropriate focus-and-context visual representation as well as a combined CPU and GPU implementation in one example to achieve a balanced distribution of the computation workload.

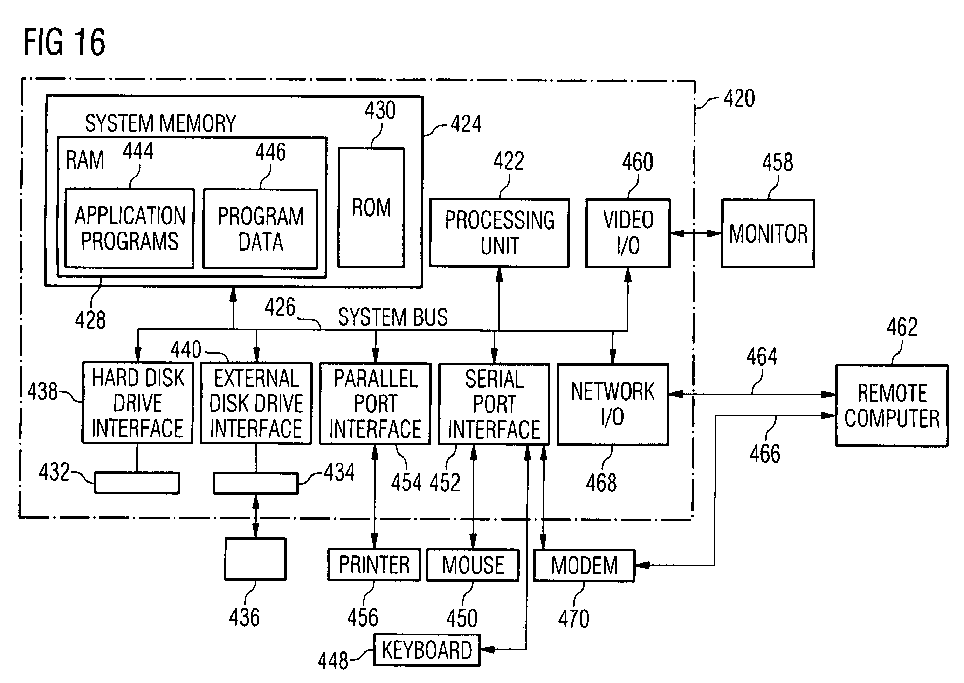

With reference to **Fig. 16**, an exemplary system for implementing the invention includes a general purpose computing device in the form of a conventional computing environment 420 (e.g. personal computer), including a processing unit 422, a system memory 424, and a system bus 426, that couples various system components including the system memory 424 to the processing unit 422. The processing unit 422 may perform arithmetic, logic and/or control operations by accessing system memory 424. The system memory 424 may store information and/or instructions for use in combination with processing unit 422. The system memory 424 may include volatile and non-volatile memory, such as random access memory (RAM) 428 and read only memory (ROM) 430. A basic input/output system (BIOS) containing the basic routines that helps to transfer information between elements within the personal computer 420, such as during start-up, may be stored in ROM 430. The system bus 426 may be any of several types of bus structures including a memory bus or memory controller, a peripheral bus, and a local bus using any of a variety of bus architectures.

The personal computer 420 may further include a hard disk drive 432 for reading from and writing to a hard disk (not shown), and an external disk drive 434 for reading from or writing to a removable disk 436. The removable disk may be a magnetic disk for a magnetic disk driver or an optical disk such as a CD ROM for an optical disk drive. The hard disk drive 432 and external disk drive 434 are connected to the system bus 426 by a hard disk drive interface 438 and an external disk drive interface 440, respectively. The drives and their associated computer-readable media provide nonvolatile storage of computer readable instructions, data structures, program modules and other data for the personal computer 420. The data structures may include relevant data of the implementation of the method for dynamically detecting and visualizing actions and events in video data streams, as described in more details below. The relevant data may be organized in a database, for example a relational or object database.

Although the exemplary environment described herein employs a hard disk (not shown) and an external (removable) disk 436, it should be appreciated by those skilled in the art that other types of computer readable media which can store data that is accessible by a computer, such as magnetic cassettes, flash memory cards, digital video disks, random access memories, read only memories, and the like, may also be used in the exemplary operating environment.

A number of program modules may be stored on the hard disk, external (removable) disk 436, ROM 430 or RAM 428, including an operating system (not shown), one or more application programs 444, other program modules (not shown), and program data 446. The application programs may include at least a part of the functionality as detailed in Figs. 1 to 15.

A user may enter commands and information, as discussed below, into the personal computer 420 through input devices such as keyboard 448 and mouse 450. Other input devices (not shown) may include a microphone (or other sensors), joystick, game pad, scanner, or the like. These and other input devices may be connected to the processing unit 422 through a serial port interface 452 that is coupled to the system bus 426, or may be collected by other interfaces, such as a parallel port interface 454, game port or a universal serial bus (USB). Further, information may be printed using printer 456. The printer 456, and other parallel input/output devices may be connected to the processing unit 422 through parallel port interface 454. A monitor 458 or other type of display device is also connected to the system bus 426 via an interface, such as a video input/output 460 may be connected to one ore more surveillance cameras that provide one or more video streams. In addition to the monitor, computing environment 420 may include other peripheral output devices (not shown), such as speakers or other audible output.

The computing environment 420 may communicate with other electronic devices such as a computer, telephone (wired or wireless), personal digital assistant, television, surveillance video cameras or the like. To communicate, the computer environment 20 may operate in a networked environment using connections to one or more electronic devices. **Fig. 16** depicts the computer environment networked with remote computer 462. The remote computer 462 may be another computing environment such as a server, a router, a network PC, a peer device or other common network node, and may include many or all of the elements described above relative to the computing environment 420. The logical connections depicted in **Fig. 16** include a local area network (LAN) 464 and a wide area network (WAN) 466. Such networking environments are commonplace in offices, enterprise-wide computer networks, intranets and the Internet.

When used in a LAN networking environment, the computing environment 420 may be connected to the LAN 464 through a network I/O 468. When used in a WAN networking environment, the computing environment 420 may include a modem 470 or other means for establishing communications over the WAN 466. The modem 470, which may be internal or external to computing environment 420, is connected to the system bus 426 via the serial port interface 452. In a networked environment, program modules depicted relative to the computing environment 420, or portions thereof, may be stored in a remote memory storage device resident on or accessible to remote computer 462. Furthermore other data relevant to the application of the insurance claim management evaluation method (described in more detail further below) may be resident on or accessible via the remote computer 462. The data may be stored for example in an object or a relation database. It will be appreciated that the network connections shown are exemplary and other means of establishing a communications link between the electronic devices may be used.

The above-described computing system is only one example of the type of computing system that may be used to implement the method for dynamically detecting and visualizing actions and events in video data streams.

**List of Reference Numerals**

| | |
|---|---|
| 10, 12 | frame or snapshot |
| 20 | multi-field video visualization or VPG |
| 20a | closed-up view of VPG |
| 21, 23, 25, 27 | frame |
| 22a, 22, 24, 26 | object |
| 22b, 22c | attribute of object 22 |
| 31, 33, 35 | object |
| 31 a,33a, 35a | central position of object 31, 33, 35, respectively |
| 30a-30e | visualization mappings or abstract illustrations |
| 100 | video visualization system |
| 110 | input video data stream |
| 120 | video processing sub-system |
| 121-125 | processing modules |
| 130, 140 | extracted data and/or information |
| 150 | video visualization sub-system |
| 150a | software modules |
| 150b | GPU-modules |
| 151 | create geometry/fill volumes module |
| 152 | volume slicer/slice tesselator module |
| 153 | action geometry renderer module |
| 154 | action volume renderer module |
| 155 | key frame slice renderer |
| 160 | action visualization |
| 170 | user interface |
| 180 | bricking and interaction method |
| 420 | conventional computing environment |
| 422 | processing unit |
| 424 | system memory |
| 426 | system bus |
| 428 | random access memory (RAM) |
| 430 | read only memory (ROM) |
| 432 | hard disk drive |
| 434 | external disk drive |
| 436 | removable disk |
| 438 | hard disk drive interface |
| 440 | external disk drive interface |
| 444 | one or more application programs |
| 446 | program data |
| 448 | keyboard |
| 450 | mouse |
| 452 | serial port interface |
| 454 | parallel port interface |
| 456 | printer |
| 458 | monitor |
| 460 | video input/output |
| 462 | remote computer |

| 464 | local area network (LAN) |
| 466 | wide area network (WAN) |
| 468 | network I/O |
| 470 | a modem |

## Claims

1. Computer-implemented method for dynamically detecting and visualizing actions and/or events in video data streams, the method comprising:

   dynamically detecting and extracting one or more objects (22, 24, 26; 31, 33, 35) and one or more attributes (22-1, 22-2, 22-3, 22-4, 22-5; 31-1, 33-1, 35-1 to 31-6, 33-6, 35-6) relating to the one or more objects (22, 24, 26; 31, 33, 35) from at least one video data stream (110) by using action recognition filtering (121, 123, 124) for attribute detection and time series analysis (122) for relation detection to detect relationships among the extracted one or more objects (22, 24, 26; 31, 33, 35); and
   dynamically generating a multi-field video visualization in which the extracted attributes are visualized simultaneously (20) along a time axis by depicting the video data stream (110) as a series of frames (21, 23, 25, 27) at a relatively sparse or even dense interval and by continuously rendering the one or more attributes (22-1, 22-2, 22-3, 22-4, 22-5; 31-1, 33-1, 35-1 to 31-6, 33-6, 35-6) relating to the one or more objects (22, 24, 26; 31, 33, 35) with substantially continuous abstract illustrations (30a to 30e) by mapping the one or more objects (22, 24, 26; 31, 33, 35) and the related one or more attributes (22-1, 22-2, 22-3, 22-4, 22-5; 31-1, 33-1, 35-1 to 31-6, 33-6, 35-6) to color, thickness, opacity, symbols, and/or glyphs representations such that the multi-field video visualization (20) conveying multi-field information is achieved, and
   dynamically generating the multi-field video visualization (20) by further:

      placing the frames (21, 23, 25, 27) as snapshots at any position in a video volume rendered within a time span and applying a different viewing angle and a sheared volume in z-dimension to each of the frames (21, 23, 25, 27), wherein the detected one or more objects (22, 24, 26; 31, 33, 35) and their related one or more attributes (22-1, 22-2, 22-3, 22-4, 22-5; 31-1, 33-1, 35-1 to 31-6, 33-6, 35-6) are highlighted with the continuous abstract illustrations (30a to 30e) such that the multi-field video visualization (20) conveys multi-field information; and
      constructing a video perpetuo gram (VPG) with the video volume which is illustrated with a shear in z-dimension and a parallel or orthographic projection such that a continuous illustration is enabled.

2. Method according to claim 1, wherein the one or more attributes (22-1, 22-2, 22-3, 22-4, 22-5; 31-1, 33-1, 35-1 to 31-6, 33-6, 35-6) comprise at least one object position and size attribute, at least one action attribute, at least one relation attribute, and/or at least one plausibility attribute relating to the one or more objects (22, 24, 26; 31, 33, 35).

3. Method according to claim 1 or 2, wherein the action recognition filtering (121, 123, 124) comprises:

   tracking and stabilizing the one or more objects (22, 24, 26; 31, 33, 35) by computing at least one motion sequence (22') for at least one of the one or more objects (22); and
   computing at least one motion descriptor for the at least one motion sequence (22').

4. Method according to any one of the preceding claims, wherein the time series analysis (122) comprises one or more functions for performing filtering, moving average, cross-correlation, and/or power of time series computations on the one or more objects (22, 24, 26; 31, 33, 35) and their related attributes (22-1, 22-2, 22-3, 22-4, 22-5; 31-1, 33-1, 35-1 to 31-6, 33-6, 35-6).

5. Method according to any one of the preceding claims, wherein the at least one video streams (110) and at least one further video data stream recorded by one ore more video cameras is visualized in parallel in the multi-field video visualization (20).

6. Method according to any one of the preceding claims, wherein generating a multi-field video visualization (20) further comprises:

   visualizing the one or more attributes (22-1, 22-2, 22-3, 22-4, 22-5; 31-1, 33-1, 35-1 to 31-6, 33-6, 35-6) of the one or more objects (22, 24, 26; 31, 33, 35) in a combined focus and context approach by blending the frames (21, 23, 25, 27) with a deph-dependent alpha value over a visible volume signature and by rendering the one or more objects (22, 24, 26; 31, 33, 35) with substantially full opacity;

combining for the multi-field video visualization (20) of the video data stream (110) volume rendering of object traces indicating relations among the one or more objects (22, 24, 26; 31, 33, 35) with additional glyphs to indicate the one or more attributes (22-1, 22-2, 22-3, 22-4, 22-5; 31-1, 33-1, 35-1 to 31-6, 33-6, 35-6) as object actions of the one or more objects (22, 24, 26; 31, 33, 35).

7. Method according to any one of claims 2 to 6, wherein rendering the one or more attributes (22-1, 22-2, 22-3, 22-4, 22-5; 31-1, 33-1, 35-1 to 31-6, 33-6, 35-6) further comprises:

visualizing the at least one object position and size attribute using a thickness-based mapping (30a);
visualizing the at least one action attribute using a color-based mapping or a symbol-based mapping (30b);
visualizing the at least one relation attribute using a color-based mapping (30e); and/or
visualizing the at least one plausibility attribute using a thickness-based mapping (30a) or a color-based mapping (30e).

8. Method according to any one of the preceding claims, wherein generating a multi-field video visualization (20) further comprises:

employing methods to achieve real-time rendering.

9. Computer program product comprising computer readable instructions, which when loaded and run in a computer and/or computer network system, causes the computer system and/or the computer network system to perform operations according to a method of any one of the preceding claims.

10. System for dynamically detecting and visualizing actions and/or events in video data streams, the system comprising:

a video data processing sub-system (120) operable to dynamically detect and extract one or more objects (22, 24, 26; 31, 33, 35) and one or more attributes (22-1, 22-2, 22-3, 22-4, 22-5; 31-1, 33-1, 35-1 to 31-6, 33-6, 35-6) relating to the one or more objects (22, 24, 26; 31, 33, 35) from at least one video data stream by using action recognition filtering for attribute detection and time series analysis for relation detection to detect relationships among the extracted one or more objects (22, 24, 26; 31, 33, 35); and
a video data visualization sub-system (150) operable to:

dynamically generate a multi-field video visualization (20) in which the extracted attributes are visualised simultaneously along a time axis *t* by depicting the video data stream (110) as a series of frames (21, 23, 25, 27) at a relatively sparse or even dense interval and by continuously rendering the one or more attributes (22-1, 22-2, 22-3, 22-4, 22-5; 31-1, 33-1, 35-1 to 31-6, 33-6, 35-6) relating to the one or more objects (22, 24, 26; 31, 33, 35) with substantially continuous abstract illustrations (30a to 30e) by mapping the one or more objects (22, 24, 26; 31, 33, 35) and the related one or more attributes (22-1, 22-2, 22-3, 22-4, 22-5; 31-1, 33-1, 35-1 to 31-6, 33-6, 35-6) to color, thickness, opacity, symbols, and/or glyphs representations such that the multi-field video visualization (20) conveying multi-field information is achieved,
depict the video data stream (110) as a series of frames (21, 23, 25, 27) by placing the frames (21, 23, 25, 27) as snapshots at any position in a video volume rendered within a time span and applying a different viewing angle and a sheared volume in z-dimension to each of the frames (21, 23, 25, 27), wherein the detected one or more objects (22, 24, 26; 31, 33, 35) and their related one or more attributes (22-1, 22-2, 22-3, 22-4, 22-5; 31-1, 33-1, 35-1 to 31-6, 33-6, 35-6) are highlighted with the continuous abstract illustrations (30a to 30e) such that the multi-field video visualization (20) conveys multi-field information; and
construct a video perpetuo gram (VPG) with the video volume which is illustrated with a shear in z-dimension and a parallel or orthographic projection such that a continuous illustration is enabled.

11. System according to claim 10, wherein the one or more attributes (22-1, 22-2, 22-3, 22-4, 22-5; 31-1, 33-1, 35-1 to 31-6, 33-6, 35-6) comprise at least one object position and size attribute, at least one action attribute, at least one relation attribute, and/or at least one plausibility attribute relating to the one or more objects (22, 24, 26; 31, 33, 35).

12. System according to claim 10 or 11, wherein the action recognition filtering comprises one or more functions operable to:

track and stabilize the one or more objects (22, 24, 26; 31, 33, 35) by computing at least one motion sequence (22') for at least one of the one or more objects (22); and

compute at least one motion descriptor for the at least one motion sequence (22').

13. System according to any one of claims 10 to 12, wherein the time series analysis comprises one or more functions operable to perform filtering, moving average, cross-correlation, and/or power of time series computations on the one or more objects (22, 24, 26; 31, 33, 35) and their related attributes (22-1, 22-2, 22-3, 22-4, 22-5; 31-1, 33-1, 35-1 to 31-6, 33-6, 35-6).

14. System according to any of claims 10 to 13, wherein the at least one video streams (110) and at least one further video data stream recorded by one ore more video cameras is visualized in parallel in the multi-field video visualization (20).

15. System according to any one of claims 10 to 14, wherein the video data visualization sub-system (150) is further operable to:

visualize the one or more attributes (22-1, 22-2, 22-3, 22-4, 22-5; 31-1, 33-1, 35-1 to 31-6, 33-6, 35-6) of the one or more objects (22, 24, 26; 31, 33, 35) in a combined focus and context approach by blending the frames (21, 23, 25, 27) with a deph-dependent alpha value over a visible volume signature and by rendering the one or more objects with substantially full opacity;

combine for the multi-field video visualization (20) of the video data stream (110) volume rendering of object traces indicating relations among the one or more objects (22, 24, 26; 31, 33, 35) with additional glyphs to indicate the one or more attributes (22-1, 22-2, 22-3, 22-4, 22-5; 31-1, 33-1, 35-1 to 31-6, 33-6, 35-6) as object actions of the one or more objects (22, 24, 26; 31, 33, 35).

16. System according to any one of claims 11 to 15, wherein the video data processing sub-system is further operable to:

visualize the at least one object position and size attribute using a thickness-based mapping (30a);
visualize the at least one action attribute using a color-based mapping or a symbol-based mapping (30b);
visualize the at least one relation attribute using a color-based mapping (30f); and/or
visualize the at least one plausibility attribute using a thickness-based mapping (30a) or a color-based mapping (30f).

17. System according to any one of claims 10 to 16, wherein the video data visualization sub-system (150) is further operable to:

employ methods to achieve real-time rendering.

**Patentansprüche**

1. Computerimplementiertes Verfahren zum dynamischen Detektieren und Visualisieren von Aktionen und/oder Ereignissen in Videodatenströmen bzw. -streams, wobei das Verfahren umfasst:

dynamisches Detektieren und Extrahieren eines oder mehrerer Objekte (22, 24, 26; 31, 33, 35) und eines oder mehrerer Attribute (22-1, 22-2, 22-3, 22-4, 22-5; 31-1, 33-1, 35-1 bis 31-6, 33-6, 35-6), die das eine oder die mehreren Objekte (22, 24, 26; 31, 33, 35) betreffen, aus zumindest einem Videodatenstrom bzw. -stream (110) unter Verwendung von Aktionserkennungsfilterung (121, 123, 124) zur Attributdetektion und Zeitreihenanalyse (122) zur Relationsdetektion, um Beziehungen zwischen dem extrahierten einen oder den extrahierten mehreren Objekten (22, 24, 26; 31, 33, 35) zu detektieren; und

dynamisches Generieren einer Mehrfeldvideovisualisierung (20), bei der die extrahierten Attribute simultan visualisiert werden, entlang einer Zeitachse t durch Darstellen des Videodatenstroms bzw. -streams (110) als eine Reihe von Rahmen bzw. Frames (21, 23, 25, 27) mit einem relativ spärlichen oder sogar dichten Intervall und durch kontinuierliches Rendern des einen oder der mehreren Attribute (22-1, 22-2, 22-3, 22-4, 22-5; 31-1, 33-1, 35-1 bis 31-6, 33-6, 35-6), die das eine oder die mehreren Objekte (22, 24, 26; 31, 33, 35) betreffen, mit im Wesentlichen kontinuierlichen abstrakten Illustrationen (30a bis 30e) durch Abbilden bzw. Mappen des einen oder der mehreren Objekte (22, 24, 26; 31, 33, 35) und des betreffenden einen oder der mehreren Attribute (22-1, 22-2, 22-3, 22-4, 22-5; 31-1, 33-1, 35-1 bis 31-6, 33-6, 35-6) zu bzw. auf Farbe-, Dicke-, Opazität-, Symbole- und/oder Glyphen-Darstellungen, so dass die Mehrfeldvideovisualisierung (20), die Mehrfeldinformationen übermittelt, erreicht wird, und

dynamisches Generieren der Mehrfeldvideovisualisierung (20) durch ferner:

Platzieren der Rahmen bzw. Frames (21, 23, 25, 27) als Schnappschüsse an einer Position in einem Videovolumen, das innerhalb einer Zeitspanne gerendert wird, und Anbringen bzw. Anwenden eines unterschiedlichen Betrachtungswinkels und eines gescherten Volumens in Z-Dimension auf jeden der Rahmen bzw. Frames (21, 23, 25, 27), wobei das detektierte eine oder die detektierten mehreren Objekte (22, 24, 26; 31, 33, 35) und ihr betreffendes eines oder ihre betreffenden mehreren Attribute (22-1, 22-2, 22-3, 22-4, 22-5; 31-1, 33-1, 35-1 bis 31-6, 33-6, 35-6) mit den kontinuierlichen abstrakten Illustrationen (30a bis 30e) hervorgehoben werden, so dass die Mehrfeldvideovisualisierung (20) Mehrfeldinformationen übermittelt; und

Konstruieren eines VideoPerpetuoGrams (VPG) mit dem Videovolumen, das mit einer Scherung bzw. Abscherung in z-Dimension und einer Parallel- oder orthogonalen Projektion illustriert wird, so dass eine kontinuierliche Illustration ermöglicht wird.

2. Verfahren nach Anspruch 1, wobei das eine oder die mehreren Attribute (22-1, 22-2, 22-3, 22-4, 22-5; 31-1, 33-1, 35-1 bis 31-6, 33-6, 35-6) zumindest eine Objektposition und Größenattribut, zumindest ein Aktionsattribut, zumindest ein Relationsattribut und/oder zumindest ein Plausibilitätsattribut umfassen, das bzw. die das eine oder die mehreren Objekte (22, 24, 26; 31, 33, 35) betreffen.

3. Verfahren nach Anspruch 1 oder 2, wobei die Aktionserkennungsfilterung (121, 123, 124) umfasst:

Verfolgen und Stabilisieren des einen oder der mehreren Objekte (22, 24, 26; 31, 33, 35) durch Berechnen zumindest einer Bewegungssequenz (22') für das zumindest eine des einen oder der mehreren Objekte (22); und Berechnen zumindest eines Bewegungsdeskriptors für die zumindest eine Bewegungssequenz (22').

4. Verfahren nach einem der vorhergehenden Ansprüche, wobei die Zeitreihenanalyse (122) eine oder mehrere Funktionen zum Durchführen von Filterung-, Bewegungsdurchschnitt-, Kreuzkorrelation- und/oder Potenz- bzw. Leistungvon-Zeitreihe-Berechnungen an dem einen oder den mehreren Objekten (22, 24, 26; 31, 33, 35) und ihren verwandten bzw. betreffenden Attributen (22-1, 22-2, 22-3, 22-4, 22-5; 31-1, 33-1, 35-1 bis 31-6, 33-6, 35-6) umfasst.

5. Verfahren nach einem der vorhergehenden Ansprüche, wobei der zumindest eine Videostrom (110) und zumindest ein weiterer Videodatenstrom, aufgezeichnet von einer oder mehreren Videokameras, parallel zu der Mehrfeldvideovisualisierung (20) visualisiert wird.

6. Verfahren nach einem der vorhergehenden Ansprüche, wobei das Generieren einer Mehrfeldvideovisualisierung (20) ferner umfasst:

Visualisieren des einen oder der mehreren Attribute (22-1, 22-2, 22-3, 22-4, 22-5; 31-1, 33-1, 35-1 bis 31-6, 33-6, 35-6) des einen oder der mehreren Objekte (22, 24, 26; 31, 33, 35) in einem kombinierten Fokus- und Kontextansatz durch Mischen bzw. Überblenden der Rahmen (21, 23, 25, 27) mit einem tiefen- bzw. höhenabhängigen Alphawert über eine sichtbare Volumensignatur und durch Rendern des einen oder der mehreren Objekte (22, 24, 26; 31, 33, 35) mit im Wesentlichen voller bzw. ganzer Opazität;

Kombinieren, für die Mehrfeldvideovisualisierung (20) des Videodatenstroms (110), Volumenrendern von Objektspuren, die Beziehungen unter dem einen oder den mehreren Objekten (22, 24, 26; 31, 33, 35) angeben, mit zusätzlichen Glyphen, um das eine oder die mehreren Attribute (22-1, 22-2, 22-3, 22-4, 22-5; 31-1, 33-1, 35-1 bis 31-6, 33-6, 35-6) als Objektaktionen des einen oder der mehreren Objekte (22, 24, 26; 31, 33, 35) anzugeben.

7. Verfahren nach einem der Ansprüche 2 bis 6, wobei das Rendern des einen oder der mehreren Attribute (22-1, 22-2, 22-3, 22-4, 22-5; 31-1, 33-1, 35-1 bis 31-6, 33-6, 35-6) ferner umfasst:

Visualisieren der zumindest einen Objektposition und Größenattributs unter Verwendung einer dickenbasierten Abbildung bzw. Mapping (30a);
Visualisieren des zumindest einen Aktionsattributs unter Verwendung einer farbbasierten Abbildung bzw. Mapping oder einer symbolbasierten Abbildung bzw. Mapping (30b);
Visualisieren des zumindest einen Beziehungsattributs unter Verwendung einer farbbasierten Abbildung bzw.

Mapping (30e); und/oder

Visualisieren des zumindest einen Plausibilitätsattributs unter Verwendung einer dickenbasierten Abbildung bzw. Mapping (30a) oder einer farbbasierten Abbildung bzw. Mapping (30e).

8. Verfahren nach einem der vorhergehenden Ansprüche, wobei das Generieren einer Mehrfeldvideovisualisierung (20) ferner umfasst:

Anwenden von Verfahren zum Erzielen eines Echtzeit-Renderns.

9. Computerprogrammprodukt, umfassend computerlesbare Instruktionen, die, wenn in einem Computer und/oder Computernetzwerksystem geladen und ausgeführt, das Computersystem und/oder das Computernetzwerksystem veranlassen, Operationen gemäß einem Verfahren nach einem der vorhergehenden Ansprüche durchzuführen.

10. System zum dynamischen Detektieren und Visualisieren von Aktionen und/oder Ereignissen in Videodatenströmen bzw. -streams, wobei das System umfasst:

ein Videodatenverarbeitungsuntersystem (120), das betriebsfähig ist, eines oder mehrerer Objekte (22, 24, 26; 31, 33, 35) und eines oder mehrerer Attribute (22-1, 22-2, 22-3, 22-4, 22-5; 31-1, 33-1, 35-1 bis 31-6, 33-6, 35-6), die das eine oder die mehreren Objekte (22, 24, 26; 31, 33, 35) betreffen, aus zumindest einem Videodatenstrom bzw. -stream dynamisch zu detektieren und zu extrahieren, und zwar unter Verwendung von Aktionserkennungsfilterung zur Attributdetektion und Zeitreihenanalyse zur Relationsdetektion, um Beziehungen zwischen dem extrahierten einen oder den extrahierten mehreren Objekten (22, 24, 26; 31, 33, 35) zu detektieren; und
ein Videodatenvisualisierungsuntersystem (150), das betriebsfähig ist, um:

eine Mehrfeldvideovisualisierung (20), bei der die extrahierten Attribute simultan visualisiert werden, entlang einer Zeitachse t durch Darstellen des Videodatenstroms bzw. -streams (110) als eine Reihe von Rahmen bzw. Frames (21, 23, 25, 27) mit einem relativ spärlichen oder sogar dichten Intervall und durch kontinuierliches Rendern des einen oder der mehreren Attribute (22-1, 22-2, 22-3, 22-4, 22-5; 31-1, 33-1, 35-1 bis 31-6, 33-6, 35-6), die das eine oder die mehreren Objekte (22, 24, 26; 31, 33, 35) betreffen, mit im Wesentlichen kontinuierlichen abstrakten Illustrationen (30a bis 30e) durch Abbilden bzw. Mappen des einen oder der mehreren Objekte (22, 24, 26; 31, 33, 35) und des betreffenden einen oder der mehreren Attribute (22-1, 22-2, 22-3, 22-4, 22-5; 31-1, 33-1, 35-1 bis 31-6, 33-6, 35-6) zu bzw. auf Farbe-, Dicke-, Opazität-, Symbole- und/oder Glyphen-Darstellungen dynamisch zu generieren, so dass die Mehrfeldvideovisualisierung (20), die Mehrfeldinformationen übermittelt, erreicht wird, und
den Videodatenstrom bzw. -stream (110) als eine Reihe von Rahmen bzw. Frames (21, 23, 25, 27) durch Platzieren der Rahmen bzw. Frames (21, 23, 25, 27) als Schnappschüsse an einer Position in einem Videovolumen darzustellen, das innerhalb einer Zeitspanne gerendert wird, und einen unterschiedlichen Betrachtungswinkel und ein geschertes Volumen in Z-Dimension auf jeden der Rahmen bzw. Frames (21, 23, 25, 27) anzubringen bzw. anzuwenden, wobei das detektierte eine oder die detektierten mehreren Objekte (22, 24, 26; 31, 33, 35) und ihr betreffendes eines oder ihre betreffenden mehreren Attribute (22-1, 22-2, 22-3, 22-4, 22-5; 31-1, 33-1, 35-1 bis 31-6, 33-6, 35-6) mit den kontinuierlichen abstrakten Illustrationen (30a bis 30e) hervorgehoben werden, so dass die Mehrfeldvideovisualisierung (20) Mehrfeldinformationen übermittelt; und
ein VideoPerpetuoGram (VPG) mit dem Videovolumen, das mit einer Scherung bzw. Abscherung in z-Dimension und einer Parallel- oder orthogonalen Projektion illustriert wird, zu konstruieren, so dass eine kontinuierliche Illustration ermöglicht wird.

11. System nach Anspruch 10, wobei das eine oder die mehreren Attribute (22-1, 22-2, 22-3, 22-4, 22-5; 31-1, 33-1, 35-1 bis 31-6, 33-6, 35-6) zumindest eine Objektposition und Größenattribut, zumindest ein Aktionsattribut, zumindest ein Relationsattribut und/oder zumindest ein Plausibilitätsattribut umfassen, das bzw. die das eine oder die mehreren Objekte (22, 24, 26; 31, 33, 35) betreffen.

12. System nach Anspruch 10 oder 11, wobei die Aktionserkennungsfilterung eine oder mehrere Funktionen umfasst, die betriebsfähig sind, um:

das eine oder die mehreren Objekte (22, 24, 26; 31, 33, 35) durch Berechnen zumindest einer Bewegungssequenz (22') für das zumindest eine des einen oder der mehreren Objekte (22) zu verfolgen und zu stabilisieren;

und

zumindest einen Bewegungsdeskriptors für die zumindest eine Bewegungssequenz (22') zu berechnen.

**13.** System nach einem der Ansprüche 10 bis 12, wobei die Zeitreihenanalyse eine oder mehrere Funktionen umfasst, die betriebsfähig sind, Filterung-, Bewegungsdurchschnitt-, Kreuzkorrelation- und/oder Potenz- bzw. Leistung-von-Zeitreihe-Berechnungen an dem einen oder den mehreren Objekten (22, 24, 26; 31, 33, 35) und ihren verwandten bzw. betreffenden Attributen (22-1, 22-2, 22-3, 22-4, 22-5; 31-1, 33-1, 35-1 bis 31-6, 33-6, 35-6) durchzuführen.

**14.** System nach einem der Ansprüche 10 bis 13, wobei der zumindest eine Videostrom (110) und zumindest ein weiterer Videodatenstrom, aufgezeichnet von einer oder mehreren Videokameras, parallel zu der Mehrfeldvideovisualisierung (20) visualisiert wird.

**15.** System nach einem der Ansprüche 10 bis 14, wobei das Videodatenvisualisierungsuntersystem (150) ferner betriebsfähig ist, um:

das eine oder die mehreren Attribute (22-1, 22-2, 22-3, 22-4, 22-5; 31-1, 33-1, 35-1 bis 31-6, 33-6, 35-6) des einen oder der mehreren Objekte (22, 24, 26; 31, 33, 35) in einem kombinierten Fokus- und Kontextansatz durch Mischen bzw. Überblenden der Rahmen (21, 23, 25, 27) mit einem tiefen- bzw. höhenabhängigen Alphawert über eine sichtbare Volumensignatur und durch Rendern des einen oder der mehreren Objekte (22, 24, 26; 31, 33, 35) mit im Wesentlichen voller bzw. ganzer Opazität zu visualisieren;
für die Mehrfeldvideovisualisierung (20) des Videodatenstroms (110) Volumenrendern von Objektspuren, die Beziehungen unter dem einen oder den mehreren Objekten (22, 24, 26; 31, 33, 35) angeben, mit zusätzlichen Glyphen zu kombinieren, um das eine oder die mehreren Attribute (22-1, 22-2, 22-3, 22-4, 22-5; 31-1, 33-1, 35-1 bis 31-6, 33-6, 35-6) als Objektaktionen des einen oder der mehreren Objekte (22, 24, 26; 31, 33, 35) anzugeben.

**16.** System nach einem der Ansprüche 11 bis 15, wobei das Videodateverarbeitungsuntersystem ferner betriebsfähig ist, um:

die zumindest eine Objektposition und Größenattribut unter Verwendung einer dickenbasierten Abbildung bzw. Mapping (30a) zu visualisieren;
das zumindest eine Aktionsattribut unter Verwendung einer farbbasierten Abbildung bzw. Mapping oder einer symbolbasierten Abbildung bzw. Mapping (30b) zu visualisieren;
das zumindest eine Beziehungsattribut unter Verwendung einer farbbasierten Abbildung bzw. Mapping (30e) zu visualisieren; und/oder
das zumindest eine Plausibilitätsattribut unter Verwendung einer dickenbasierten Abbildung bzw. Mapping (30a) oder einer farbbasierten Abbildung bzw. Mapping (30e) zu visualisieren.

**17.** System nach einem der Ansprüche 10 bis 16, wobei das Videodatenvisualisierungsuntersystem (150) ferner betriebsfähig ist, um:

Verfahren zum Erzielen eines Echtzeit-Renderns anzuwenden.

## Revendications

**1.** Procédé mis en oeuvre par ordinateur pour détecter de manière dynamique et visualiser des actions et/ou des événements dans des flux de données vidéo, le procédé comprenant les étapes consistant à :

détecter de manière dynamique et extraire un ou plusieurs objets (22, 24, 26 ; 31, 33, 35) et un ou plusieurs attributs (22-1, 22-2, 22-3, 22-4, 22-5 ; 31-1, 33-1, 35-1 à 31-6, 33-6, 35-6) concernant le ou les objets (22, 24, 26 ; 31, 33, 35) d'au moins un flux de données vidéo (110) en utilisant un filtrage de reconnaissance d'action (121, 123, 124) pour la détection d'attributs et une analyse de série temporelle (122) pour la détection de relation afin de détecter des relations parmi le ou les objets extraits (22, 24, 26 ; 31, 33, 35) ; et
générer de manière dynamique une visualisation vidéo à champs multiples (20) dans laquelle les attributs extraits sont visualisés simultanément le long d'un axe temporel t en représentant le flux de données vidéo (110) en tant que série de trames (21, 23, 25, 27) à un intervalle relativement éparse ou même dense et en rendant en continu le ou les attributs (22-1, 22-2, 22-3, 22-4, 22-5 ; 31-1, 33-1, 35-1 à 31-6, 33-6, 35-6) concernant le ou les objets (22, 24, 26 ; 31, 33, 35) avec des illustrations abstraites essentiellement continues (30a à 30e) en mettant en correspondance le ou les objets (22, 24, 26 ; 31, 33, 35) et le ou les attributs liés (22-1, 22-2, 22-3, 22-4, 22-5 ; 31-1, 33-1, 35-1 à 31-6, 33-6, 35-6) avec des représentations de couleur, épaisseur, opacité, symboles et/ou glyphes de sorte que la visualisation vidéo à champs multiples (20) véhiculant des informations à champs multiples est obtenue, et

générer de manière dynamique la visualisation vidéo à champs multiples (20) en :

plaçant en outre les trames (21, 23, 25, 27) en tant qu'instantanés en toute position dans un volume vidéo rendu au sein d'une plage temporelle et appliquant un angle de vue différent et un volume découpé dans la dimension z à chacune des trames (21, 23, 25, 27), dans lequel le ou les objets détectés (22, 24, 26 ; 31, 33, 35) et leurs un ou plusieurs attributs liés (22-1, 22-2, 22-3, 22-4, 22-5 ; 31-1, 33-1, 35-1 à 31-6, 33-6, 35-6) sont mis en évidence avec les illustrations abstraites continues (30a à 30e) de sorte que la visualisation vidéo à champs multiples (20) véhicule des informations à champs multiples ; et construisant un VideoPerpetuoGram (VPG) avec le volume vidéo qui est illustré avec une découpe dans la dimension z et une projection parallèle ou orthographique de sorte qu'une illustration continue est permise.

2. Procédé selon la revendication 1, dans lequel le ou les attributs (22-1, 22-2, 22-3, 22-4, 22-5 ; 31-1, 33-1, 35-1 à 31-6, 33-6, 35-6) comprennent au moins un attribut de position et de taille d'objet, au moins un attribut d'action, au moins un attribut de relation et/ou au moins un attribut de plausibilité concernant le ou les objets (22, 24, 26 ; 31, 33, 35).

3. Procédé selon la revendication 1 ou 2, dans lequel le filtrage de reconnaissance d'action (121, 123, 124) comprend :

le traçage et la stabilisation du ou des objets (22, 24, 26 ; 31, 33, 35) en calculant au moins une séquence de mouvement (22') pour au moins un du ou des objets (22) ; et le calcul d'au moins un descripteur de mouvement pour l'au moins une séquence de mouvement (22').

4. Procédé selon l'une quelconque des revendications précédentes, dans lequel l'analyse de série temporelle (122) comprend une ou plusieurs fonctions pour réaliser un filtrage, un déplacement de moyenne, une corrélation croisée et/ou une puissance de calculs de série temporelle sur le ou les objets (22, 24, 26 ; 31, 33, 35) et leurs attributs liés (22-1, 22-2, 22-3, 22-4, 22-5 ; 31-1, 33-1, 35-1 à 31-6, 33-6, 35-6).

5. Procédé selon l'une quelconque des revendications précédentes, dans lequel l'au moins un flux de données vidéo (110) et au moins un autre flux de données vidéo enregistré par une ou plusieurs caméras vidéo sont visualisés en parallèle dans la visualisation vidéo à champs multiples (20).

6. Procédé selon l'une quelconque des revendications précédentes, dans lequel la génération d'une visualisation vidéo à champs multiples (20) comprend en outre :

la visualisation du ou des attributs (22-1, 22-2, 22-3, 22-4, 22-5 ; 31-1, 33-1, 35-1 à 31-6, 33-6, 35-6) du ou des objets (22, 24, 26 ; 31, 33, 35) dans une approche de distance focale et de contexte combinée en mélangeant les trames (21, 23, 25, 27) avec une valeur alpha dépendant de la profondeur sur une signature de volume visible et en rendant le ou les objets (22, 24, 26 ; 31, 33, 35) avec une opacité essentiellement entière ; la combinaison pour la visualisation vidéo à champs multiples (20) du flux de données vidéo (110) d'un rendu de volume de traces d'objet indiquant des relations parmi le ou les objets (22, 24, 26 ; 31, 33, 35) à des glyphes supplémentaires pour indiquer le ou les attributs (22-1, 22-2, 22-3, 22-4, 22-5 ; 31-1, 33-1, 35-1 à 31-6, 33-6, 35-6) en tant qu'actions d'objet du ou des objets (22, 24, 26 ; 31, 33, 35).

7. Procédé selon l'une quelconque des revendications 2 à 6, dans lequel le rendu du ou des attributs (22-1, 22-2, 22-3, 22-4, 22-5 ; 31-1, 33-1, 35-1 à 31-6, 33-6, 35-6) comprend en outre :

la visualisation de l'au moins un attribut de position et de taille d'objet en utilisant une mise en correspondance en fonction de l'épaisseur (30a) ; la visualisation de l'au moins un attribut d'action en utilisant une mise en correspondance en fonction de la couleur ou une mise en correspondance en fonction de symboles (30b) ; la visualisation de l'au moins un attribut de relation en utilisant une mise en correspondance en fonction de la couleur (30e) ; et/ou la visualisation de l'au moins un attribut de plausibilité en utilisant une mise en correspondance en fonction de l'épaisseur (30a) ou une mise en correspondance en fonction de la couleur (30e).

8. Procédé selon l'une quelconque des revendications précédentes, dans lequel la génération d'une visualisation vidéo à champs multiples (20) comprend en outre :

l'emploi de procédés pour obtenir un rendu en temps réel.

9. Produit de programme informatique comprenant des instructions lisibles par ordinateur qui, lors de son chargement et exécution dans un système informatique et/ou de réseau informatique, provoque la réalisation par le système informatique et/ou le système de réseau informatique d'opérations selon un procédé selon l'une quelconque des revendications précédentes.

10. Système pour détecter de manière dynamique et visualiser des actions et/ou des événements dans des flux de données vidéo, le système comprenant :

un sous-système de traitement de données vidéo (120) pouvant opérer pour détecter de manière dynamique et extraire un ou plusieurs objets (22, 24, 26 ; 31, 33, 35) et un ou plusieurs attributs (22-1, 22-2, 22-3, 22-4, 22-5 ; 31-1, 33-1, 35-1 à 31-6, 33-6, 35-6) concernant le ou les objets (22, 24, 26 ; 31, 33, 35) d'au moins un flux de données vidéo en utilisant un filtrage de reconnaissance d'action pour la détection d'attributs et une analyse de série temporelle pour la détection de relation afin de détecter des relations parmi le ou les objets extraits (22, 24, 26 ; 31, 33, 35) ; et
un sous-système de visualisation de données vidéo (150) pouvant opérer pour :

générer de manière dynamique une visualisation vidéo à champs multiples (20) dans laquelle les attributs extraits sont visualisés simultanément le long d'un axe temporel t en représentant le flux de données vidéo (110) en tant que série de trames (21, 23, 25, 27) à un intervalle relativement éparse ou même dense et en rendant en continu le ou les attributs (22-1, 22-2, 22-3, 22-4, 22-5 ; 31-1, 33-1, 35-1 à 31-6, 33-6, 35-6) concernant le ou les objets (22, 24, 26 ; 31, 33, 35) avec des illustrations abstraites essentiellement continues (30a à 30e) en mettant en correspondance le ou les objets (22, 24, 26 ; 31, 33, 35) et le ou les attributs liés (22-1, 22-2, 22-3, 22-4, 22-5 ; 31-1, 33-1, 35-1 à 31-6, 33-6, 35-6) avec des représentations de couleur, épaisseur, opacité, symboles et/ou glyphes de sorte que la visualisation vidéo à champs multiples (20) véhiculant des informations à champs multiples est obtenue,
représenter le flux de données vidéo (110) en tant que série de trames (21, 23, 25, 27) en plaçant les trames (21, 23, 25, 27) en tant qu'instantanés en toute position dans un volume vidéo rendu au sein d'une plage temporelle et appliquant un angle de vue différent et un volume découpé dans la dimension z à chacune des trames (21, 23, 25, 27), dans lequel le ou les objets détectés (22, 24, 26 ; 31, 33, 35) et leurs un ou plusieurs attributs liés (22-1, 22-2, 22-3, 22-4, 22-5 ; 31-1, 33-1, 35-1 à 31-6, 33-6, 35-6) sont mis en évidence avec les illustrations abstraites continues (30a à 30e) de sorte que la visualisation vidéo à champs multiples (20) véhicule des informations à champs multiples ; et
construire un VideoPerpetuoGram (VPG) avec le volume vidéo qui est illustré avec une découpe dans la dimension z et une projection parallèle ou orthographique de sorte qu'une illustration continue est permise.

11. Système selon la revendication 10, dans lequel le ou les attributs (22-1, 22-2, 22-3, 22-4, 22-5 ; 31-1, 33-1, 35-1 à 31-6, 33-6, 35-6) comprennent au moins un attribut de position et de taille d'objet, au moins un attribut d'action, au moins un attribut de relation et/ou au moins un attribut de plausibilité concernant le ou les objets (22, 24, 26 ; 31, 33, 35).

12. Système selon la revendication 10 ou 11, dans lequel le filtrage de reconnaissance d'action comprend une ou plusieurs fonctions pouvant opérer pour :

tracer et stabiliser le ou les objets (22, 24, 26 ; 31, 33, 35) en calculant au moins une séquence de mouvement (22') pour au moins un du ou des objets (22) ; et
calculer au moins un descripteur de mouvement pour l'au moins une séquence de mouvement (22').

13. Système selon l'une quelconque des revendications 10 à 12, dans lequel l'analyse de série temporelle comprend une ou plusieurs fonctions pouvant opérer pour réaliser un filtrage, un déplacement de moyenne, une corrélation croisée et/ou une puissance de calculs de série temporelle sur le ou les objets (22, 24, 26 ; 31, 33, 35) et leurs attributs liés (22-1, 22-2, 22-3, 22-4, 22-5 ; 31-1, 33-1, 35-1 à 31-6, 33-6, 35-6).

**14.** Système selon l'une quelconque des revendications 10 à 13, dans lequel l'au moins un flux de données vidéo (110) et au moins un autre flux de données vidéo enregistré par une ou plusieurs caméras vidéo sont visualisés en parallèle dans la visualisation vidéo à champs multiples (20).

**15.** Système selon l'une quelconque des revendications 10 à 14, dans lequel le sous-système de visualisation de données vidéo (150) peut en outre opérer pour :

> visualiser le ou les attributs (22-1, 22-2, 22-3, 22-4, 22-5 ; 31-1, 33-1, 35-1 à 31-6, 33-6, 35-6) du ou des objets (22, 24, 26 ; 31, 33, 35) dans une approche de distance focale et de contexte combinée en mélangeant les trames (21, 23, 25, 27) avec une valeur alpha dépendant de la profondeur sur une signature de volume visible et en rendant le ou les objets avec une opacité essentiellement entière ;
> combiner pour la visualisation vidéo à champs multiples (20) du flux de données vidéo (110) un rendu de volume de traces d'objet indiquant des relations parmi le ou les objets (22, 24, 26 ; 31, 33, 35) à des glyphes supplémentaires pour indiquer le ou les attributs (22-1, 22-2, 22-3, 22-4, 22-5 ; 31-1, 33-1, 35-1 à 31-6, 33-6, 35-6) en tant qu'actions d'objet du ou des objets (22, 24, 26 ; 31, 33, 35).

**16.** Système selon l'une quelconque des revendications 11 à 15, dans lequel le sous-système de traitement de données vidéo peut en outre opérer pour :

> visualiser l'au moins un attribut de position et de taille d'objet en utilisant une mise en correspondance en fonction de l'épaisseur (30a) ;
> visualiser l'au moins un attribut d'action en utilisant une mise en correspondance en fonction de la couleur ou une mise en correspondance en fonction de symboles (30b) ;
> visualiser l'au moins un attribut de relation en utilisant une mise en correspondance en fonction de la couleur (30f) ; et/ou
> visualiser l'au moins un attribut de plausibilité en utilisant une mise en correspondance en fonction de l'épaisseur (30a) ou une mise en correspondance en fonction de la couleur (30f).

**17.** Système selon l'une quelconque des revendications 10 à 16, dans lequel le sous-système de visualisation de données vidéo (150) peut en outre opérer pour :

> employer des procédés pour obtenir un rendu en temps réel.

# FIG 1

# FIG 2

FIG 3

Video Processing 120

Captured Video Stream 110

121 Object Extraction
122 Object Relations
123 Action Recognition
124 Action Plausibility
125 Motion Estimation

Object Volumes 130

Object Lists 140

Video Visualization 150

151 Create Geometry / Fill Volumes
152 Volume Slicer / Slice Tesselator
153 Action Geometry Renderer
154 Action Volume Renderer
155 Key Frame Slice Renderer

150a

150b

Action Visualization 160

User Interface 170

Bricking and Interaction 180

100

FIG 4A

~22

FIG 4B

~22

FIG 4C

22~
22~

FIG 4D

22~
22~

22~
22~

FIG 4E

22~
22~

22~
22~

EP 2 112 619 B1

# FIG 5A

# FIG 5B

# FIG 6

# FIG 7A

Legend

Size 1
Size 2
Size 3
Size 4

t

x

35-1  31-1  33-1

30a

# FIG 7B

Legend

Size 1
Size 2
Size 3
Size 4

t

x

35-2  31-2  33-2

30b

# FIG 7C

Legend

[0, 0.25]
[0.25, 0.5]
[0.5, 0.75]
[0.75, 1]

t

x

35-3  31-3  33-3

30c

# FIG 7D

Legend

Type 1
Type 2
Type 3
Type 4

t

x

35-4  31-4  33-4

30d

# FIG 7E

Legend

Type 1
Type 2
Type 3
Type 4

t

x

35-5  31-5  33-5

30e

# FIG 7F

Legend

[0, 0.25]
[0.25, 0.5]
[0.5, 0.75]
[0.75, 1]

t

x

35-6  31-6  33-6

30f

33

# FIG 8

| Legend | walk left | standing | walk right | | first rel. | second rel. | third rel. | fourth rel. | fifth rel. | sixth rel. |
|---|---|---|---|---|---|---|---|---|---|---|
| high | | | | obj.occl. | | | | | | |
| low | | | | undef. fel. | | | | | | |

FIG 9

| Legend | walk left | standing | walk right | | first rel. | second rel. | third rel. | fourth rel. | fifth rel. | sixth rel. |
|--------|-----------|----------|------------|------------|------------|-------------|------------|-------------|------------|------------|
| | | | | undef. fel. | | | | | | |

## FIG 10

| Legend | walk left | standing | walk right | | first rel. | second rel. | third rel. | fourth rel. | fifth rel. | sixth rel. |
|---|---|---|---|---|---|---|---|---|---|---|
| high | | | | obj.occl. | | | | | | |
| low | | | | undef. rel. | | | | | | |

FIG 11

Legend   walk left   standing   walk right     first rel.   second rel.   third rel.   fourth rel.   fifth rel.   sixth rel.

undef. rel.

## FIG 12

| Legend | walk left | standing | walk right | | first rel. | second rel. | third rel. | fourth rel. | fifth rel. | sixth rel. |
|---|---|---|---|---|---|---|---|---|---|---|
| high | | | | obj.occl. | | | | | | |
| low | | | | undef. rel. | | | | | | |

# FIG 13

Legend: walk left | standing | walk right | undef. fel. | first rel. | second rel. | third rel. | fourth rel. | fifth rel. | sixth rel.

# FIG 14

| Legend | walk left | standing | walk right | | first rel. | second rel. | third rel. | fourth rel. | fifth rel. | sixth rel. |
|---|---|---|---|---|---|---|---|---|---|---|
| high | | | | obj.occl. | | | | | | |
| low | | | | undef. fel. | | | | | | |

## FIG 15

# FIG 16

SYSTEM MEMORY

430

424

420

RAM  444  446

APPLICATION PROGRAMS

PROGRAM DATA

ROM

422

PROCESSING UNIT

460

VIDEO I/O

458

MONITOR

428

426  SYSTEM BUS

462

438

HARD DISK DRIVE INTERFACE

440

EXTERNAL DISK DRIVE INTERFACE

PARALLEL PORT INTERFACE

SERIAL PORT INTERFACE

NETWORK I/O

464

REMOTE COMPUTER

466

432

434

454  452

468

436

PRINTER

MOUSE

MODEM

470

456

450

KEYBOARD

448

EP 2 112 619 B1

42

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1868162 A2

**Non-patent literature cited in the description**

- **R. BOTCHEN et al.** GPU-assisted Multi-field Video Volume Visualization. *Volume Graphics,* 2006
- **D. DEMENTHON et al.** Video retrieval of near-duplicates using k-nearest neighbor retrieval of spatio-temporal descriptors. *Multimed Tools Appl,* 2006, vol. 30, 229-253
- **Y. RICQUEBOURG et al.** Real-Time Tracking of Moving Persons by Exploiting Spatio-Temporal Image Slices. *IEEE Transactions on Pattern Analysis and Machine Intelligence,* 01 August 2000, vol. 22 (8